# EUROPÄISCHE PATENTSCHRIFT

(11) **EP 3 708 423 B1**
(45) Veröffentlichungstag und Bekanntmachung des Hinweises auf die Patenterteilung: **16.11.2022**
(21) Anmeldenummer: 20161108.4
(22) Anmeldetag: 05.03.2020
(51) Int. Cl.: B60N 2/60

(54) **KRAFTFAHRZEUGSITZ-SCHUTZFOLIE, FOLIENBAHN MIT KRAFTFAHRZEUGSITZ-SCHUTZFOLIEN, VERFAHREN ZUR HERSTELLUNG EINER FOLIENBAHN UND KRAFTFAHRZEUGSITZ-BAUGRUPPE**
MOTOR VEHICLE SEAT PROTECTIVE FILM, FILM SHEET WITH MOTOR VEHICLE SEAT PROTECTIVE FILMS, METHOD FOR PRODUCING A FILM AND MOTOR VEHICLE SEAT ASSEMBLY
FILM DE PROTECTION DE SIÈGE DE VÉHICULE AUTOMOBILE, BANDE CONTINUE DU FILM DE PROTECTION DE SIÈGE DE VÉHICULE AUTOMOBILE, PROCÉDÉ DE FABRICATION D'UNE BANDE CONTINUE ET MODULE SIÈGE DE VÉHICULE AUTOMOBILE

(30) Priorität: 11.03.2019 DE 202019101357 U
(43) Veröffentlichungstag der Anmeldung: 16.09.2020
(73) Patentinhaber: Horn & Bauer GmbH & Co. KG, 34613 Schwalmstadt (DE)
(72) Erfinder: Mohr, Thomas, 35279 Neustadt-Momberg (DE)
(74) Vertreter: REHBERG HÜPPE + PARTNER

(56) Entgegenhaltungen:
- EP-A1- 3 251 892
- DE-A1- 2 851 649
- DE-A1- 19 618 814
- DE-U1-202012 001 042

## Beschreibung

### TECHNISCHES GEBIET DER ERFINDUNG

Die vorliegende Erfindung betrifft eine Kraftfahrzeugsitz-Schutzfolie sowie eine Folienbahn mit mehreren derartigen Kraftfahrzeugsitz-Schutzfolien. Des Weiteren betrifft die Erfindung eine Kraftfahrzeugsitz-Baugruppe, die einen Kraftfahrzeugsitz und eine den Kraftfahrzeugsitz schützende Kraftfahrzeugsitz-Schutzfolie aufweist, und ein Verfahren zur Herstellung einer Folienbahn.

Kraftfahrzeugsitz-Schutzfolien werden über Kraftfahrzeugsitze gestülpt oder gezogen, um eine Verschmutzung des Kraftfahrzeugsitzes, insbesondere durch einen Fahrer, einen Passagier, einen Monteur, andere Personen oder Verschmutzungen der Umgebung, zu vermeiden. Kraftfahrzeugsitz-Schutzfolien werden beispielsweise verwendet in Automobilwerkstätten, wenn an Kraftfahrzeugen eine Inspektion oder Reparatur durchgeführt wird. Darüber hinaus finden Kraftfahrzeugsitz-Schutzfolien Einsatz zur Vermeidung einer Verschmutzung des Kraftfahrzeugsitzes beim Hersteller des Kraftfahrzeugsitzes, bei der Zulieferung des Kraftfahrzeugsitzes zum Automobilwerk und in dem Automobilwerk selbst. Auch während der Montage des Kraftfahrzeugs kommt eine Vielzahl von Monteuren nacheinander mit den Kraftfahrzeugsitzen in Berührung. Schließlich muss das fertig montierte Kraftfahrzeug vom Band gefahren, auf einen Lastkraftwagen, einen Eisenbahnwaggon oder ein Schiff aufgefahren und von diesem wieder heruntergefahren und letztendlich beim Fahrzeughändler noch mehrmals gehandhabt werden, bis das Fahrzeug und der Kraftfahrzeugsitz in möglichst sauberem Zustand in die Hand des Erwerbers ausgeliefert werden kann. Von der Herstellung des Kraftfahrzeugsitzes beim Zulieferer bis zur Auslieferung des Kraftfahrzeugs an den Erwerber kann der Kraftfahrzeugsitz unter Umständen 30-35 Mal in Kontakt mit Monteuren oder anderen Personen kommen, so dass eine erhebliche Verschmutzungsgefahr besteht, die mittels einer Kraftfahrzeugsitz-Schutzfolie vermieden werden soll.

### STAND DER TECHNIK

US 4,676,376 A offenbart eine Kraftfahrzeugsitz-Schutzfolie, die auch in Fig. 1 in einem über einen als Sitzbank ausgebildeten Kraftfahrzeugsitz gestülpten Zustand dargestellt ist. Die Kraftfahrzeugsitz-Schutzfolie 1 verfügt über eine Kunststofffolie 2, deren Breite der Breite des Kraftfahrzeugsitzes 3 im Bereich eines Sitzpolsters 4 und einer Rückenlehne 5 entspricht. Im oberen Endbereich der Rückenlehne 5 verfügt die Kunststofffolie 2 über eine Faltung 6, welche die Kunststofffolie 2 in eine Vorderlage 7 und eine Rücklage 8 unterteilt. Die der Faltung 6 benachbarten Abschnitte der Vorderlage 7 und der Rücklage 8 bilden einen Vorderlagen-Taschenbereich 9 und einen Rücklagen-Taschenbereich 10, die eine Tasche 11 begrenzen, welche auf den oberen Endbereich der Rückenlehne 5 aufgezogen ist. Um eine laterale Schließung der Tasche 11 zu ermöglichen, verfügt die Kunststofffolie 2 im Vorderlagen-Taschenbereich 9 und im Rücklagen-Taschenbereich 10 über laterale Zungen 12, 13, die die Seitenbereiche der Rückenlehne 5 umgreifen und endseitig über eine Verschweißung 14 miteinander verschweißt sind. Die Tasche 11 dient der Fixierung der Kraftfahrzeugsitz-Schutzfolie 1 an der Rückenlehne 5 und damit an dem Kraftfahrzeugsitz 3. Abseits des Vorderlagen-Taschenbereichs 9 bildet die Vorderlage 7 einen Vorderlagen-Abdeckbereich 15, der die dem Fahrer oder Passagier zugewandte Seite der Rückenlehne 5 und des Sitzpolsters 4 schützend abdeckt. Für das dargestellte Ausführungs-beispiel weist der Vorderlagen-Abdeckbereich 15 eine so große Länge auf, dass dieser auch über den vorderen Rand des Sitzpolsters 4 hinausgeht, von diesem herunterhängt und somit auch die Vorderseite des Sitzpolsters 4 schützt. Um die Fixierung der Kraftfahrzeugsitz-Schutzfolie 1 an dem Kraftfahrzeugsitz 3 (über die Zentrierung und Fixierung durch die Aufnahme der Rückenlehne 5 in der Tasche 11 der Kraftfahrzeugsitz-Schutzfolie 1 hinaus) zu verbessern, schlägt US 4,676,376 A vor, dass die Kraftfahrzeugsitz-Schutzfolie 1 aus einer Kunststofffolie 2 hergestellt ist, die zwei Schichten aufweist. Die bei der Benutzung dem Kraftfahrzeugsitz 3 zugewandte Schicht besitzt dabei eine größere Reibung oder Anhaftung als die dem Kraftfahrzeugsitz 3 abgewandte Schicht, welche in Wechselwirkung mit der Person tritt. Die unterschiedliche Gestaltung der Reibung und Anhaftung der beiden Schichten hat zur Folge, dass bei einer Bewegung einer auf dem Kraftfahrzeugsitz 3 mit darauf angeordneter Kraftfahrzeugsitz-Schutzfolie 1 sitzenden Person infolge der kleineren Reibung oder Anhaftung im Kontaktbereich zwischen der Person und der der Person zugewandten Schicht der Kraftfahrzeugsitz-Schutzfoliel eine Relativbewegung zwischen der Person und der Kraftfahrzeugsitz-Schutzfolie 1 erfolgt, während die Kraftfahrzeugsitz-Schutzfolie 1 ohne Relativbewegung oder mit nur einem geringen Maß der Relativbewegung weiterhin an dem Kraftfahrzeugsitz 3 anliegt und anhaftet. Die Kraftfahrzeugsitz-Schutzfolie 1 ist somit zuverlässig infolge der Reibung oder Anhaftung in den zu schützenden Bereichen gegenüber unerwünschten Relativbewegungen gesichert, die zu einer Beeinträchtigung der angestrebten Schutzwirkung führen würden. US 4,676,376 A schlägt vor, dass die dem Kraftfahrzeugsitz 3 abgewandte Schicht der Kunststofffolie 2, die im Folgenden auch als "erste außenliegende Schicht" bezeichnet wird, aus einem High-Density Polyethylen (im Folgenden "HDPE") besteht, während die dem Kraftfahrzeugsitz 3 zugewandte Schicht, die im Folgenden auch als "zweite außenliegende Schicht" bezeichnet wird, aus einem Low-Density Polyethylen (im Folgenden "LDPE"), insbesondere einem Linear Low-Density Polyethylen (im Folgenden "LLDPE"), besteht. Das LLDPE kann dabei mit oder ohne Additive ausgebildet sein, wobei als mögliche Additive Diatomeenerde oder Sand vorgeschlagen werden. Für die erste außenliegende Schicht kann reguläres HDPE oder solches mit hohem oder mittleren molekularen Gewicht Einsatz finden. Als Dicke der Kunststofffolie wird eine Dicke von zumindest 0,3 mil vorgeschlagen. Die erste außenliegende Schicht soll einen Reibkoeffizienten von 0,2 oder weniger aufweisen, während die zweite außenliegende Schicht einen Reibkoeffizienten von mindestens 0,5 aufweisen soll. Möglicherweise kann auch die zweite außenliegende Schicht statisch elektrisch aufgeladen sein, um die Anhaftung derselben zu vergrößern. Die Schichtdicke der ersten außenliegenden Schicht beträgt ca. 10-20 % der Schichtdicke der Kunststofffolie. Zur Bevorratung einer Vielzahl von Kraftfahrzeugsitz-Schutzfolien 1 kann diese im Vorderlagen-Abdeckbereich zweifach gefaltet werden. Mehrere derart gefaltete Kraftfahrzeugsitz-Schutzfolien 1 können dann gestapelt in einem Karton bevorratet werden und bedarfsgerecht sukzessive aus einer Öffnung des Kartons entnommen werden.

Auf der Website **www.slipngrip.com** bietet der Anmelder von US 4,676,376 A eine Schutzfolie aus einer Kunststofffolie mit zwei Schichten mit unterschiedlichen Reibungen und Anhaftungen an, wobei hier die Kunststofffolie rechteckig ist und somit nicht die zuvor beschrieben Zungen aufweist. Die Kunststofffolie ist hier (relativ zu der Breite des Fahrzeugsitzes) breiter ausgebildet als in dem Patent US 4,676,376 A und somit breiter als die Breite der Rückenlehne, so dass sich laterale Seitenbereiche der Vorderlage und der Rücklage um die Seitenbereiche des oberen Endbereichs der Rückenlehne erstrecken können und die Ränder der Vorderlage und der Rücklage zur Bildung der Tasche unmittelbar miteinander verschweißt sind. Die Kraftfahrzeugsitz-Schutzfolie gemäß der Website www.slipngrip.com ist (abweichend zu der Kraftfahrzeugsitz-Schutzfolie gemäß US 4,676,376 A) für einen Kraftfahrzeugsitz bestimmt, der auch eine Kopfstütze aufweist. Um dennoch die Fixierung der Kraftfahrzeugsitz-Schutzfolie im oberen Endbereich der Rücklehne an dem Kraftfahrzeugsitz zu ermöglichen, ist hier die Tasche mit einer vergrößerten Tiefe ausgebildet, so dass sich die Tasche von der Kopfstütze über den Spalt zwischen Kopfstütze und Rückenlehne bis zu dem oberen Endbereich der Rückenlehne erstrecken kann.

DE 36 01 390 C1 offenbart einen Schutzfoliensatz für bei der Durchführung von Reparaturarbeiten abzudeckende Fahrzeugteile. Der Schutzfoliensatz weist eine Kraftfahrzeugsitz-Schutzfolie und ergänzende Schutzfolienteile wie beispielsweise einen Lenkradüberzug, einen Fußbodenbelag oder sonstige, zum Schutz bestimmte Schutzfolien auf. Hierbei kann die Kraftfahrzeugsitz-Schutzfolie eine oder zwei Taschen aufweisen und mit oder ohne Perforation im Endbereich einer oberen Tasche für den Durchtritt einer Kopfstütze ausgestattet sein. Eine Vorratsrolle kann eine Folienbahn aufweisen, in welcher quer zur Förderrichtung der Folienbahn während der Herstellung und quer zu der Wickelrichtung der Vorratsrolle Kraftfahrzeugsitz-Schutzfolien aneinanderhängen, die dann über Perforationen voneinander getrennt werden können. Zur Bildung der mindestens einen Tasche ist die Folienbahn im Bereich eines hinsichtlich der Förderrichtung der Folienbahn lateralen Randes umgeschlagen, wobei der umgeschlagene Folienbereich zur seitlichen Begrenzung der Tasche mit dem nicht umgeschlagenen Folienbereich verschweißt ist. In die Tasche kann lose ein Fußbodenbelag und ein Lenkradschutz eingelegt werden.

DE 195 36 062 C1 offenbart eine Kraftfahrzeugsitz-Schutzfolie, die für eine erste Ausführungsform lediglich über eine obere Tasche verfügt, deren Breite der konstanten Breite der Kraftfahrzeugsitz-Schutzfolie und damit der Breite des Kraftfahrzeugsitzes entspricht. Die obere Tasche ist gebildet mit einem ersten Folienstück, welches die Vorderlage der Kraftfahrzeugsitz-Schutzfolie bildet, und einem zweiten Folienstück, welches im Bereich der oberen Tasche eine Rücklage bildet. Die Folienstücke sind zur Bildung der nach unten offenen oberen Tasche mittels lateralen Verschweißungen und einer oberen Verschweißung miteinander verschweißt. Bei der Herstellung ist die Kraftfahrzeugsitz-Schutzfolie quer zu einer Förderrichtung orientiert. Die lateralen Verschweißungen können in einen Bereich der oberen Tasche verschoben sein, der an der Kopfstütze des Kraftfahrzeugsitzes zum Liegen kommt. Die obere Tasche ist dazu bestimmt, den oberen Endbereich der Rückenlehne und eine Kopfstütze aufzunehmen. Mehrere Kraftfahrzeugsitz-Schutzfolien können zusammenhängend in einer Folienbahn bereitgestellt werden, wobei diese dann im Bereich von Perforationen voneinander getrennt werden können. Für eine weitere Ausführungsform wird mit einem weiteren Folienstück auch eine untere Tasche an der Kraftfahrzeugsitz-Schutzfolie bereitgestellt. Die Schutzfolie kann aus einem koextrudierten Folienmaterial mit zwei oder drei Schichten hergestellt sein, wobei die außenliegenden Schichten unterschiedliche Reibkoeffizienten aufweisen können und eine mittlere Schicht eine erhöhte Reißfestigkeit aufweisen kann.

DE 28 51 649 A1 offenbart eine Kraftfahrzeugsitz-Schutzfolie aus einem transparenten Kunststoffmaterial wie Polyethylen. Die Kraftfahrzeugsitz-Schutzfolie besteht aus einer Kunststofffolie, die ausgehend von einer Vorderlage im Bereich der lateralen Ränder über eine erste Faltung lateral nach innen gefaltet ist, eng benachbart der ersten Faltung mit einer zweiten Faltung lateral nach außen gefaltet ist und im Bereich einer dritten Faltung, die über der ersten Faltung zum Liegen kommt, wieder lateral nach innen gefaltet ist, wo diese Rücklagenteile bildet. Zwischen der ersten Faltung und der dritten Faltung bildet die Schutzfolie Keilteile überschüssigen Materials. Die lateral innenliegenden Endbereiche der beiden Rücklagenteile grenzen unter Ausbildung eines in Längsrichtung orientierten durchgehenden Spaltes aneinander an. Die beiden Rücklagenteile sind im oberen Endbereich sowie im unteren Endbereich über laterale Verschweißungen mit der Vorderlage verschweißt. Die Rücklagenteile bilden mit den zugeordneten Folienbereichen der Vorderlage jeweils laterale Taschen, in welche in lateraler Richtung die Rückenlehne und ein Sitzpolster eingeführt werden können und welche den Kraftfahrzeugsitz seitlich einschließen.

DE 196 45 999 C1 offenbart einen Kraftfahrzeugsitz-Schutzfolie mit vier übereinander liegenden Lagen, die eine Sitztasche, deren Breite der Breite des Sitzpolsters entspricht, und eine Tasche, deren Breite der Breite der Rückenlehne entspricht, bilden.

DE 33 41 541 A1 offenbart ebenfalls eine Kraftfahrzeugsitz-Schutzfolie, bei der eine Folienbahn mit in Längsrichtungen der Kraftfahrzeugsitz-Schutzfolie verlaufenden Faltungen so vorgefaltet wird, dass diese eine Vorderlage und ein oberes und ein unteres Rücklagenteil bildet. Durch Verschweißungen der Rücklagenteile mit der Vorderlage sind eine obere, für die Rückenlehne bestimmte Tasche sowie eine untere, für das Sitzpolster bestimmte Tasche gebildet.

DE 10 2013 105 728 A1 offenbart einen Schichtaufbau, Schichtdicken und Zusammensetzungen der Schichten einer Mehrschichtfolie, die eine thermisch aktivierbare Kleberschicht aufweisen soll. Eine derartige Mehrschichtfolie soll Einsatz finden für Laminate in der Möbel- und/oder Fußbodenlaminatherstellung.

DE 92 04 236 U1 offenbart eine Kraftfahrzeugsitz-Schutzfolie mit einer oberen, für das Überstülpen über eine Rückenlehne bestimmten Tasche sowie einer unteren, für das Überstülpen über ein Sitzpolster bestimmten Tasche. Die Kraftfahrzeugsitz-Schutzfolie kann eine Fixier- und Eingriffslasche aufweisen, über welche die Kraftfahrzeugsitz-Schutzfolie zusätzlich in einem Spalt zwischen der Rückenlehne und dem Sitzpolster fixiert werden kann. Vorzugsweise ist die Vorderlage auf ihrer dem Kraftfahrzeugsitz zugewandten Rückseite rutschgesichert ausgestaltet, wozu diese Rückseite einen höheren Reibungskoeffizienten aufweisen kann als die Vorderseite. Im oberen Endbereich kann die obere Tasche über Durchtrittsöffnungen für die Stangen einer Kopfstütze verfügen, womit die Kopfstütze außerhalb der oberen Tasche angeordnet ist und nicht von der Kraftfahrzeugsitz-Schutzfolie geschützt ist.

DE 20 2012 001 042 U1offenbart einen Sitzpolsterschoner für einen Kraftfahrzeugsitz, der die Kopfstütze, die Vorderseite der Rückenlehne, die Oberseite des Sitzpolsters und die Seitenflächen der Rückenlehne und des Sitzpolsters abdecken soll. Der Sitzschoner verfügt über eine obere Tasche, deren Breite der konstanten Breite des Sitzpolsterschoners entspricht, womit die Breite der oberen Tasche größer ist als die Breite der Rückenlehne. Der Sitzpolsterschoner kann somit sowohl auf einen Kraftfahrzeugsitz mit Kopfstütze als auch auf einen Kraftfahrzeugsitz ohne Kopfstütze aufgezogen werden. Der Sitzpolsterschoner ist ca. 75 cm bis 90 cm breit und verfügt über eine Länge von 100 cm bis 150 cm. Die Tiefe der oberen Tasche liegt im Bereich von 25 bis 50 cm. Möglich ist auch, dass ein derartiger Sitzpolsterschoner mehrere Sitze oder Sitzbänke abdecken soll, womit dann eine entsprechend breitere Folie und breitere obere Tasche verwendet werden soll. Die dem Benutzer zugeordnete Seite des Sitzpolsterschoners soll glatt und gleitfördernd sein, während die Rückseite starke Hafteigenschaften aufweisen soll, um eine Rutschhemmung des Sitzpolsterschoners gegenüber dem Kraftfahrzeugsitz zu gewährleisten. Die Folie kann zwei Schichten aufweisen, die aus unterschiedlichen Polyethylen-Typen bestehen können. Für die Schicht, die die dem Benutzer zugewandte Vorderseite bildet, kann ein Polyethylen-Typ hoher Dichte, beispielsweise HDPE, verwendet werden, um die gewünschten glatten Eigenschaften zur Verfügung zu stellen. Hingegen wird vorgeschlagen, für die Schicht, die die dem Kraftfahrzeugsitz zugewandte Rückseite bildet, eine Schicht mit einem Polyethylen-Typen niedriger Dichte, insbesondere LDPE oder LLDPE, zu verwenden, um den hohen gewünschten Reibungskoeffizienten und die guten Hafteigenschaften zu gewährleisten. Eine Beeinflussung der Hafteigenschaften kann auch über geeignete Additive und/oder eine elektrostatische Aufladung erfolgen. Die Schichten können unterschiedliche Dicken aufweisen. Zwischen den genannten Schichten kann eine dritte Schicht vorhanden sein, die aus recyceltem Polyethylen bestehen kann.

Die aus den Druckschriften EP 0 564 872 B1 und EP 2 008 866 A2 bekannten Ausführungsformen entsprechen im Wesentlichen der Ausführungsform, die aus DE 92 04 236 U1 bekannt ist.

Gemäß DE 196 18 814 A1 wird eine Rücklage eines abgeplatteten Folienschlauches mit einem durchgehenden Schlitz versehen. Der geschlitzte Folienschlauch durchläuft dann ein Spreizwerkzeug, welches den Abstand der lateralen Faltungen vergrößert und somit die Vorderlage verbreitert, womit sich die Breite die Schlitzes vergrößert. Hieran anschließend werden in die lateralen Randbereiche des geschlitzten und aufgeweiteten abgeplatteten Folienschlauches V-förmige Schweißnähte mit benachbarten V-förmigen Perforationen eingebracht, wobei die Spitze des V in Richtung der Längsachse des Folienschlauches weist und der Abstand der V-förmigen Schweißnähte und Perforationen der Breite eines herzustellenden Fahrzeugsitz-Schutzbezuges entspricht. Die Spitzen der V-förmigen Perforationen und Schweißnähte werden anschließend mittels eines weiteren Schweiß- und Perforationswerkzeugs mit einer sich über die gesamte Breite des Folienschlauches erstreckenden Schweißnaht sowie Perforationen auf beiden Seiten dieser Schweißnaht miteinander verbunden. Anschließend werden über Greifwerkzeuge die V-förmigen Perforationen im lateralen Randbereich des Folienschlauches abgerissen. Möglich ist, dass die Seitenschenkel der V-förmigen Schweißnähte und Perforationen geschwungen oder S-förmig ausgebildet sind und die V-förmigen Schweißnähte und Perforationen in einem lateralen Randbereich breiter sind und sich weiter in Richtung der Längsachse des Folienschlauches erstrecken als in dem anderen lateralen Seitenbereich. Die Vorderlage und die geschlitzte Rücklage der durch die durchgehenden Quertrennungen gebildeten Schlauchstücke bilden eine obere Tasche sowie eine untere Tasche, die in Folge der V-förmigen Schweißnähte in den lateralen Endbereichen verjüngt sind.

EP 3 251 892 A1 offenbart einen Fahrzeugsitz-Schutzbezug, der aus einer rechteckigen Kunststofffolie besteht, aus welcher laterale Seitenbereiche herausgeschnitten sind. Oberhalb der herausgeschnittenen Teilbereiche gebildete obere und untere Seitenstreifen sind in Längsrichtung so gefaltet, dass sich diese überlappen. Diese eine geteilte Rücklagenteile bildenden Seitenstreifen sind im oberen und unteren Endbereich mittels einer Querschweißung mit der Vorderlage verschweißt, so dass die Seitenbereiche mit der Vorderlage eine im Bereich der Überlappungen geschlitzte obere und untere Tasche bilden, wobei die obere Tasche auf eine Rückenlehne des Fahrzeugsitzes gestülpt werden kann, während die untere Tasche auf ein Sitzpolster des Fahrzeugsitzes aufgezogen werden kann.

### AUFGABE DER ERFINDUNG

Der Erfindung liegt die Aufgabe zugrunde, eine Kraftfahrzeugsitz-Schutzfolie vorzuschlagen, welche bei Gewährleistung
- der durch die Kraftfahrzeugsitz-Schutzfolie bereitzustellenden Schutzwirkung und
- der erforderlichen Fixierung der Kraftfahrzeugsitz-Schutzfolie an einem Kraftfahrzeugsitz gegenüber einem Verrutschen (insbesondere bei einer Bewegung einer darauf sitzenden Person)
   zu
- verringerten Herstellungskosten,
- einem reduzierten Materialeinsatz,
- einer sortenreinen Entsorgung,
- einer platzsparenden und/oder praktikablen Bevorratung und/oder
- einem ansprechenden optischen Erscheinungsbild der Kraftfahrzeugsitz-Schutzfolie auf einem Kraftfahrzeugsitz
führt. Des Weiteren liegt der Erfindung die Aufgabe zugrunde, eine entsprechend verbesserte Folienbahn mit Kraftfahrzeugsitz-Schutzfolien, ein Verfahren zur Herstellung einer Folienbahn sowie eine verbesserte Kraftfahrzeugsitz-Baugruppe vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt eine Kraftfahrzeugsitz-Schutzfolie vor, die vorzugsweise nur aus einer Kunststofffolie und an dieser erzeugten Verschweißungen besteht und (ohne Verschweißungen im entfalteten Zustand) rechteckig ist.

Die Kunststofffolie verfügt über eine Faltung, durch die die Kunststofffolie in eine Vorderlage und eine Rücklage unterteilt ist. Die Vorderlage weist zwei unterschiedliche funktionale Teilbereiche auf, nämlich einen Vorderlagen-Kopfbereich sowie einen Vorderlagen-Abdeckbereich. Der Vorderlagen-Abdeckbereich dient hierbei dem Abdecken zumindest eines großen Teils des Kraftfahrzeugsitzes (nämlich der Rückenlehne sowie des Sitzpolsters) auf der Seite des Kraftfahrzeugsitzes, die der darauf sitzenden Person zugewandt ist. Hingegen dient der Vorderlagen-Kopfbereich der Ausbildung einer Tasche und dem Abdecken der Vorderseite der Kopfstütze. Die Rücklage bildet einen Rücklagen-Kopfbereich aus. Der Vorderlagen-Kopfbereich und der Rücklagen-Kopfbereich begrenzen eine Tasche. Diese Tasche kann über einen Teil eines Kraftfahrzeugsitzes gestülpt werden, womit eine Vorgabe einer Position und/oder Orientierung der Kraftfahrzeugsitz-Schutzfolie gegenüber dem Kraftfahrzeugsitz und unter Umständen auch eine Fixierung der Kraftfahrzeugsitz-Schutzfolie an dem Kraftfahrzeugsitz erfolgen kann. Die Tasche kann dabei ein gewisses Übermaß gegenüber dem Teil des Kraftfahrzeugsitzes aufweisen oder dieses Teil eng umschließen. Sofern die Kunststofffolie eine Elastizität aufweist, kann die Tasche sogar in nicht elastisch gedehntem Zustand eine kleinere Umfangsabmessung aufweisen als die Umfangsabmessung des Teils des Kraftfahrzeugsitzes, so dass mit dem Überstülpen eine elastische Aufweitung der Tasche erforderlich ist und dann infolge der Elastizität der Tasche das Teil des Kraftfahrzeugsitzes "stramm" mit einer Vor- oder Restspannung der Kunststofffolie eingeschlossen ist.

Die Kunststofffolie verfügt über eine rechteckige Geometrie mit einer Breite B. Die Länge L der rechteckigen Kunststofffolie ergibt sich aus der Summe einer Länge des Vorderlagen-Abdeckbereichs und einer doppelten Tiefe T der Tasche. Die Kraftfahrzeugsitz-Schutzfolie weist in einem entfalteten Zustand eine Länge auf, die sich aus der Summe der Länge und der Tiefe T ergibt, und weist die Breite B auf.

Erfindungsgemäß handelt es sich bei dem Teil des Kraftfahrzeugsitzes, über den die Kraftfahrzeugsitz-Schutzfolie gestülpt wird, nicht um die Rückenlehne, wie dies gemäß US 4,676,376 A der Fall ist. Vielmehr ist die Tasche für das Überstülpen über eine Kopfstütze des Kraftfahrzeugsitzes (und vorzugsweise nur die Kopfstütze, da diese für das Überstülpen über den oberen Endbereich der Rückenlehne zu eng ist) ausgebildet und bestimmt.

Dieser erfindungsgemäße Vorschlag basiert insbesondere auf der Erkenntnis, dass für die Ausbildung einer Tasche zum Überstülpen über die Rückenlehne gemäß US 4,676,376 A erforderlich ist, dass die Kunststofffolie laterale Zungen aufweist, um die Seitenbereiche der Rückenlehne umschließen zu können. Diese Zungen bedingen aber, dass keine rechteckförmige Kunststofffolie für die Kraftfahrzeugsitz-Schutzfolie eingesetzt werden kann, sondern eine T-förmige Kunststofffolie verwendet werden muss, bei der die Seitenschenkel des T die Zungen bilden, oder dass an eine rechteckförmige Kunststofffolie zusätzlich die Zungen angeschweißt werden müssen. Diese Ausführungsform gemäß US 4,676,376 A bedingt somit einen erhöhten Materialaufwand und/oder erhöhte Fertigungskosten.

Findet hingegen eine Ausführungsform gemäß der Website www.slipngrip.com Einsatz, basiert zwar die Kraftfahrzeugsitz-Schutzfolie auf einer rechteckigen Kunststofffolie. Deren Breite ist aber größer zu bemessen als die Breite der Rückenlehne, damit die Kunststofffolie mit den lateralen Seitenbereichen die Seiten der Rückenlehne umschließen kann und im Bereich der überlappenden Seitenränder zu der Tasche verschweißt werden kann. Damit muss die Kunststofffolie eine größere Breite aufweisen als an sich erforderlich, womit ein unnötiger Materialaufwand betrieben ist.

Hinzu kommt, dass die auf der Website www.slipngrip.com dargestellte Ausführungsform auch bedingt, dass sich die Kraftfahrzeugsitz-Schutzfolie über die seitlichen Ränder der Rückenlehne und des Sitzpolsters hinaus erstreckt, so dass die Kraftfahrzeugsitz-Schutzfolie seitlich von dem Kraftfahrzeugsitz herunterhängt, was in einigen Fällen als optisch nicht ansprechend angesehen wird.

Kraftfahrzeugsitze verfügen infolge gesetzlicher Vorschriften über eine Kopfstütze. Eine Kraftfahrzeugsitz-Schutzfolie soll für einen derartigen Kraftfahrzeugsitz mit Kopfstütze auch dann die Schutzwirkung gewährleisten, wenn die Kopfstütze teilweise oder sogar vollständig herausgezogen ist. Dies hat wiederum zur Folge, dass für die bekannten Kraftfahrzeugsitz-Schutzfolien gemäß US 4,676,376 A und der Website www.slipngrip.com die Tiefe der Tasche zum Überstülpen über die Rückenlehne so groß gewählt werden muss, dass sich auch bei maximal herausgezogener Kopfstütze die Tasche immer noch bis zum oberen Endbereich der Rückenlehne erstreckt. Somit ist für die bekannten Kraftfahrzeugsitz-Schutzfolien eine große Tiefe T der Tasche erforderlich ist, welche sich aus der Summe
- der Überdeckung der Tasche mit der Rückenlehne,
- der Höhe des Kopfstütze und
- dem Abstand K der Kopfstütze von der Rückenlehne im maximal ausgezogenen Zustand
ergibt. Die Bereitstellung dieser großen Tiefe T ist aber wiederum für die bekannten Kraftfahrzeugsitz-Schutzfolien sowohl auf der Vorderseite im Bereich der Vorderlage als auch auf der Hinterseite im Bereich der Rücklage erforderlich, so dass die Kunststofffolie mit einer Längserstreckung von 2 x K Material für die Ausbildung der Tasche bereitstellen muss.

Diese Probleme werden erfindungsgemäß (zumindest teilweise) dadurch vermieden, dass die Tasche anstelle für das Überstülpen über die Rückenlehne für das Überstülpen über eine Kopfstütze des Kraftfahrzeugsitzes ausgebildet und bestimmt ist, so dass hier der Materialeinsatz und/oder der Herstellungsaufwand reduziert werden kann und sich eine Kraftfahrzeugsitz-Schutzfolie ergibt, die bei der Applikation derselben auf den Kraftfahrzeugsitz zu einem ansprechenden optischen Erscheinungsbild führt. Erfindungsgemäß werden zur Bildung der Tasche der Vorderlagen-Kopfbereich und der Rücklagen-Kopfbereich unmittelbar mittels Verschweißungen miteinander verschweißt. Der laterale Abstand A der Verschweißungen beträgt erfindungsgemäß weniger als 80 % der Breite B der Kunststofffolie. Im Extremfall kann die Breite der eingesetzten Kunststofffolie und der Kraftfahrzeugsitz-Schutzfolie so groß wie die Breite des Kraftfahrzeugsitzes oder sogar kleiner gewählt werden (ohne dass dieses zwingend der Fall ist).

Erstreckt sich erfindungsgemäß lediglich die Kopfstütze in die Tasche, ist das für die Ausbildung der Tasche bereitzustellende Material der Kunststofffolie nicht abhängig von der Stellung der Kopfstütze. Der Abstand K zwischen der Kopfstütze und dem oberen Endbereich der Rückenlehne kann dann vielmehr überbrückt werden von dem Vorderlagen-Abdeckbereich. Dies hat zur Folge, dass Material für den Abstand zwischen der Kopfstütze und der Rückenlehne lediglich einfach im Bereich des Vorderlagen-Abdeckbereichs bereitgestellt werden muss, so dass für die erfindungsgemäße Ausgestaltung auch die Längserstreckung der Kunststofffolie gegenüber der Kunststofffolie für eine Kraftfahrzeugsitz-Schutzfolie gemäß dem Stand der Technik (insbesondere zumindest um den Abstand K) reduziert werden kann.

Für die Ausbildung der Verschweißungen gibt es vielfältige Möglichkeiten. So können beispielsweise die Verschweißungen als (geradlinige, parallele oder geneigte oder beliebig kurvenförmige) Punkt- oder Linienschweißungen ausgebildet sein. Die Verschweißungen können auch so geneigt sein, dass diese "trichterartig" das Überstülpen der Kraftfahrzeugsitz-Schutzfolie über eine Kopfstütze vereinfachen.

Vorzugsweise trennen die Verschweißungen in dem Vorderlagen-Kopfbereich einen Vorderlagen-Taschenbereich von lateral hiervon (und damit außenliegend im Seitenbereich) angeordneten Vorderlagen-Seitenbereichen. Alternativ oder zusätzlich trennen die Verschweißungen in dem Rücklagen-Kopfbereich einen Rücklagen-Taschenbereich von lateral hiervon (und außenliegend im Seitenbereich) angeordneten Rücklagen-Seitenbereichen. In diesem Fall ist die Tasche ausschließlich von dem Vorderlagen-Taschenbereich, dem Rücklagen-Taschenbereich und den Verschweißungen in Umfangsrichtung begrenzt.

Für eine alternative Ausgestaltung können aber auch die Vorderlagen-Seitenbereiche und/oder die Rücklagen-Seitenbereiche zumindest teilweise weggeschnitten sein, wobei bei einem vollständigen Wegschneiden der Vorderlagen-Seitenbereiche und der Rücklagen-Seitenbereiche die Kraftfahrzeugsitz-Schutzfolie im Bereich der oberen Ecke eine treppenförmige Form aufweist, die der treppenförmigen Form im Übergangsbereich zwischen der Kopfstütze und der Rückenlehne angepasst sein kann.

Möglich ist, dass der Vorderlagen-Abdeckbereich im oberen Endbereich laterale Eckbereiche aufweist. Sind die Rücklagen-Seitenbereiche und die Vorderlagen-Seitenbereiche wie zuvor erläutert weggeschnitten, sind diese lateralen Eckbereiche frei, womit diese lediglich durch die Anhaftung an der Rückenlehne an dem Kraftfahrzeugsitz fixiert sind und die Gefahr besteht, dass diese bei dem Kontakt mit der Person herunterklappen können, womit die Schutzwirkung der Kraftfahrzeugsitz-Schutzfolie im Bereich der oberen Ecke der Rückenlehne beseitigt wäre. Für eine Ausführungsform der Erfindung sind die Eckbereiche über die Vorderlagen-Seitenbereiche mit einer Verschweißung, dem Vorderlagen-Taschenbereich und/oder über die Faltung mit dem Rücklagen-Taschenbereich und/oder einem Rücklagen-Seitenbereich verbunden, womit das erläuterte Herunterklappen der lateralen Eckbereiche erschwert ist und somit die Schutzwirkung der Kraftfahrzeugsitz-Schutzfolie und das Erscheinungsbild derselben bei Applikation auf den Kraftfahrzeugsitz verbessert sind.

Grundsätzlich kann die Kraftfahrzeugsitz-Schutzfolie aus einer Kunststofffolie
- beliebiger Zusammensetzung und/oder
- beliebigen Schichtaufbaus und/oder
- beliebiger Farbgebung und/oder
- beliebiger Bedruckung und/oder
- mit beliebigen weiteren Komponenten
hergestellt sein, wobei auch möglich ist, dass die Kunststofffolie aus mehreren miteinander verbundenen hinsichtlich dieser Kriterien unterschiedlichen Teilkunststofffolien besteht.

Vorzugsweise verfügt die Kunststofffolie über eine Dicke, die kleiner ist als 100 µm (vorzugsweise kleiner als 90 µm, kleiner als 80 µm, kleiner als 70 µm, kleiner als 60 µm, kleiner als 50 µm, kleiner als 40 µm, kleiner als 30 µm, kleiner als 25 µm, kleiner als 20 µm oder kleiner als 15 µm). Durch die Wahl einer Kunststofffolie mit einer geringen Dicke kann der Materialaufwand weiter verringert werden und es ist auch die Bevorratung mehrerer Kraftfahrzeugsitz-Schutzfolien mit einem verringerten Volumen möglich..

Für einen Vorschlag der Erfindung weist die Kunststofffolie mindestens zwei Schichten auf, wobei beispielsweise zwei Schichten oder drei Schichten zum Einsatz kommen können. Hierbei kann bei Einsatz von mehr als zwei Schichten eine innenliegende Schicht bspw. einer Farbgebung bei durchsichtigen außenliegenden Schichten dienen, einer Gewährleistung einer Elastizität oder Festigkeit oder Reißfestigkeit der Kraftfahrzeugsitz-Schutzfolie dienen u. ä.

Des Weiteren schlägt die Erfindung vor, dass eine erste außenliegende Schicht der Kunststofffolie eine niedrigere Reibung und/oder Anhaftungswirkung aufweist als eine zweite außenliegende Schicht der Kunststofffolie. Die erste außenliegende Schicht der Kunststofffolie kann dann die Kontaktfläche für die Person bereitstellen und somit auf der dem Kraftfahrzeugsitz abgewandten Seite angeordnet sein, während die zweite außenliegende Schicht der Kunststofffolie dann dem Kraftfahrzeugsitz zugewandt ist und infolge der höheren Reibung und/oder Anhaftungswirkung gewährleistet, dass sich die Kunststofffolie bei Bewegungen der Person auf dem Kraftfahrzeugsitz nicht oder in reduziertem Ausmaß verschiebt. Für die erste und zweite außenliegende Schicht (und auch weitere Schichten) können wie zuvor erwähnt beliebige Materialien Einsatz finden, die optional auch beliebige Additive aufweisen können. Im Rahmen der Erfindung kann eine Beeinflussung der Anhaftung und/oder Reibung insbesondere durch die Vorgabe des Reibkoeffizienten der außenliegenden Seite der Schicht, einer elektrostatischen Aufladung einer Schicht und/oder die Wahl des Materials und etwaiger Zusätze zu demselben erfolgen.

Für einen Vorschlag der Erfindung weist die erste außenliegende Schicht HDPE auf (oder besteht aus dieser), während die zweite außenliegende Schichte LLDPE aufweist (oder hieraus besteht).

Die Erfindung schlägt auch eine Ausführungsform der Kraftfahrzeugsitz-Schutzfolie vor, bei der die zweite außenliegende Schicht (die LLDPE aufweisen kann) 3 bis 20 Gewichtsprozent Kreide aufweist. Über den Zusatz von Kreide kann die angestrebte Reibung und/oder Anhaftung herbeigeführt werden und es kann dennoch ein möglichst leichtes Öffnen der Tasche vor dem Überstreifen der Kraftfahrzeugsitz-Schutzfolie über den Kraftfahrzeugsitz gewährleistet werden. Die Einstellung der gewünschten Eigenschaften kann dann über den Gewichtsanteil des Zusatzes der Kreide erfolgen.

Die Herstellung der Kunststofffolie kann beliebig erfolgen. Vorzugsweise wird die Kunststofffolie (beispielsweise als Bahn oder geschlossener oder geschlitzter Schlauch) in einem kontinuierlichen Extrusionsverfahren hergestellt und dann abgelängt. Hierbei ist eine beliebige Extrusionsrichtung der Kunststofffolie möglich. Für einen Vorschlag der Erfindung wird die Kunststofffolie mit einer Extrusionsrichtung und unter Umständen auch einer Förderrichtung im nachfolgenden Konfektionierungsprozess hergestellt, die quer zur Längserstreckung der Kraftfahrzeugsitz-Schutzfolie orientiert ist.

Insbesondere für eine platzsparende Bevorratung der Kraftfahrzeugsitz-Schutzfolie (beispielsweise gestapelt in einem Vorratsbehälter wie einem Karton oder aufgerollt auf einer Rolle) kann es vorteilhaft sein, wenn die Kraftfahrzeugsitz-Schutzfolie im Vorderlagen-Abdeckbereich eine weitere Faltung aufweist. Vorzugsweise ist die weitere Faltung bei der Hälfte der Längserstreckung des Vorderlagen-Abdeckbereichs angeordnet. Dies kann zur Folge haben, dass in dem bevorrateten Zustand die Kraftfahrzeugsitz-Schutzfolie eine Längserstreckung aufweist, die der Summe aus der Hälfte der Längserstreckung des Vorderlagen-Abdeckbereichs und der Tiefe der Tasche entspricht. Natürlich ist auch möglich, dass mehrere weitere Faltungen (im Bereich des Vorderlagen-Abdeckbereichs und/oder im Bereich des Vorderlagen- und Rücklagen-Kopfbereichs) vorgesehen sind, um die Abmessungen der Kraftfahrzeugsitz-Schutzfolie in dem bevorrateten Zustand weiter zu verringern.

Für eine besondere Ausgestaltung der Kraftfahrzeugsitz-Schutzfolie, welche den Herstellungsbedingungen Rechnung trägt, ist die Kraftfahrzeugsitz-Schutzfolie als Schlauchstück ausgebildet. Hierbei weist das Schlauchstück einen Schlitz auf. Der Schlitz trennt einen unteren Rand der Kunststofffolie von einem oberen Rand der Kunststofffolie. Hierbei bildet der untere Rand der Kunststofffolie den unteren Rand des Vorderlagen-Abdeckbereichs, während der obere Rand der Kunststofffolie die Eintrittsöffnung der Tasche begrenzt. Das Schlauchstück weist im bevorrateten Zustand Abplattungen auf, die die beiden genannten Faltungen bilden. Die Schlauchstück-Enden des Schlauchstücks bilden hingegen die Seitenränder der Kunststofffolie (und damit die Seitenränder des Vorderlagen-Abdeckbereichs sowie die Seitenränder der Vorderlagen-Seitenbereiche und Rücklagen-Seitenbereiche).

Vorzugsweise ist die Tiefe der Tasche der Kraftfahrzeugsitz-Schutzfolie, welche zum Überstülpen über die Kopfstütze bestimmt ist, kleiner als 400 mm, insbesondere kleiner als 350 mm oder 300 mm. Dies hat zur Folge, dass auch die Längserstreckung des Vorderlagen-Kopfbereichs und des Rücklagen-Kopfbereichs entsprechend klein sind, was letzten Endes dazu führt, dass der Materialeinsatz für die Herstellung der Kraftfahrzeugsitz-Schutzfolie klein ist.

Eine Ausgestaltung der Erfindung betrifft ebenfalls die Reduzierung des Materialeinsatzes der Kraftfahrzeugsitz-Schutzfolie. Hierbei werden die Längserstreckung und die Breite einer Folie, aus der die Kraftfahrzeugsitz-Schutzfolie hergestellt ist, ermittelt, die die Folie aufweist, wenn diese ohne Verschweißungen vollständig entfaltet ist. Diese Längserstreckung soll für eine Ausgestaltung der Erfindung weniger als 25% (vorzugsweise weniger als 20%, vorzugsweise weniger als 17%, vorzugsweise weniger als 15% oder sogar vorzugsweise weniger als 13%) größer sein als die Länge der Kraftfahrzeugsitz-Schutzfolie in dem Gebrauchszustand, also mit der Faltung und den Verschweißungen. Die Längserstreckung der Folie ist daher kleiner als die Längserstreckungen der Folien gemäß dem Stand der Technik, wodurch der Materialeinsatz reduziert werden kann. Hingegen beträgt die Breite der Folie der Breite der Kraftfahrzeugsitz-Schutzfolie in dem Gebrauchszustand, sodass die vollständige Breite der Folie genutzt werden kann.

Für einen Vorschlag der Erfindung beträgt die Breite der Kraftfahrzeugsitz-Schutzfolie weniger als 900 mm, insbesondere weniger als 850 mm, weniger als 800 mm, weniger als 750 mm, weniger als 700 mm, weniger als 650 mm oder sogar weniger als 600 mm.

Hierbei kann die Breite der Tasche kleiner sein als 650 mm, insbesondere kleiner sein als 600 mm, kleiner sein als 550 mm oder sogar kleiner sein als 530 mm.

Eine weitere Lösung der der Erfindung zugrunde liegenden Aufgabe stellt eine Folienbahn dar, in welcher mehrere Kraftfahrzeugsitz-Schutzfolien, wie diese zuvor beschrieben worden sind, zusammenhängen, wobei die Kraftfahrzeugsitz-Schutzfolien in der Folienbahn vorzugsweise über Perforationen miteinander verbunden sind. Die Folienbahn kann in einem kontinuierlichen oder teilkontinuierlichen Herstellungsprozess wie einem Extrusionsverfahren hergestellt sein. Möglich ist hierbei, dass in dem Extrusionsverfahren ein Schlauch mit mehreren über Perforationen miteinander verbundenen Schlauchstücken der zuvor erläuterten Art hergestellt werden. In diesem Fall kann der Schlitz durch Förderung des Schlauchs über ein Messer oder anderweitiges stehende Trennelement erzeugt werden. Möglich ist aber auch, dass eine ebene Folienbahn erzeugt wird, die dann abgeplattet und gefaltet werden kann. An beliebiger Stelle des erläuterten Herstellungsprozesses kann dann auch die Erzeugung der Verschweißungen mittels eines beliebigen Schweißverfahrens erfolgen.

Eine weitere Lösung der der Erfindung zugrunde liegenden Aufgabe stellt ein Verfahren zur Herstellung einer Folienbahn mit mehreren Kraftfahrzeugsitz-Schutzfolien der zuvor erläuterten Art dar. Bei diesem Verfahren wird zunächst ein Schlauchstück hergestellt, was insbesondere in einem kontinuierlichen Extrusionsverfahren erfolgen kann. Das Schlauchstück wird dann mit Abplattungen ausgestattet, die die Faltungen der späteren Kraftfahrzeugsitz-Schutzfolie bilden. Hieran anschließend wird dann in das Schlauchstück ein Schlitz eingebracht, beispielsweise mittels eines Trennmessers, entlang dessen sich das kontinuierlich hergestellte und geförderte Schlauchstück bewegt. Der Schlitz des Schlauchstücks trennt den unteren Rand der Kraftfahrzeugsitz-Schutzfolie von dem oberen Rand derselben. Vor oder nach der Erzeugung des Schlitzes werden dann die Verschweißungen erzeugt, wobei diese mit einem Abstand voneinander erzeugt werden, der kleiner ist als eine Breite des Schlauchstückes. Des Weiteren werden, vorzugsweise nach den vorgenannten Verfahrensschritten, Schnitte erzeugt, die die Seitenränder der Kunststofffolie der Kraftfahrzeugsitz-Schutzfolie bilden. Alternativ möglich ist, dass Perforationen erzeugt werden, die (nach dem Durchtrennen durch den Benutzer) die Seitenränder der Kunststofffolie der Kraftfahrzeugsitz-Schutzfolie bilden.

Eine weitere Lösung der der Erfindung zugrunde liegenden Aufgabe ist gegeben durch eine Kraftfahrzeugsitz-Baugruppe. Diese verfügt über einen Kraftfahrzeugsitz sowie eine Kraftfahrzeugsitz-Schutzfolie, die den Kraftfahrzeugsitz schützt und wie zuvor erläutert ausgebildet ist. In der erfindungsgemäßen Kraftfahrzeugsitz-Baugruppe ist die Tasche der Kraftfahrzeugsitz-Schutzfolie auf die Kopfstütze des Kraftfahrzeugsitzes aufgezogen, wobei dieses mit einem strammen Sitz erfolgen kann, wozu die Elastizität der Kopfstütze und/oder die Elastizität des Materials der Tasche eingesetzt sein kann. Möglich ist aber auch, dass die Tasche plastisch so verformbar ist, dass die Tasche die Kopfstütze eng umgibt. Eine plastische Verformung der Tasche kann auch die bedarfsgerechte spezifische Anpassung der Größe der Tasche an die jeweilige Kopfstütze ermöglichen. Schließlich ist es auch möglich, dass die Tasche derart bemessen ist, dass diese mit einem Spiel leicht über die Kopfstütze gezogen werden kann. Mittels der Tasche ist zunächst die Kopfstütze auf allen Seiten (bis auf die Unterseite) geschützt. Andererseits gewährleistet die Aufnahme der Kopfstütze in der Tasche eine erste Sicherung der Kraftfahrzeugsitz-Schutzfolie gegenüber einem Verrutschen. Der Vorderlagen-Abdeckbereich der Kraftfahrzeugsitz-Schutzfolie liegt lose auf dem Kraftfahrzeugsitz auf und deckt das Sitzpolster und die Rückenlehne des Kraftfahrzeugsitzes ab, was über eine Teilbreite derselben, über die gesamte Breite derselben oder auch mit einem gewissen Übermaß gegenüber der Breite des Sitzpolsters und/oder der Rückenlehne erfolgen kann, sodass auch möglich ist, dass der Vorderlagen-Abdeckbereich das Sitzpolster seitlich abdeckt und schützt. Erfindungsgemäß sind somit das Sitzpolster und die Rückenlehne nicht in einer zusätzlichen Tasche aufgenommen, womit der Montageaufwand reduziert wird, der Materialeinsatz verringert wird und die Herstellkosten der Kraftfahrzeugsitz-Schutzfolie verringert werden. Erfindungsgemäß ist die Kraftfahrzeugsitz-Schutzfolie ausschließlich durch die genannte erste Sicherung, nämlich die Aufnahme der Kopfstütze des Kraftfahrzeugsitzes in der Tasche der Kraftfahrzeugsitz-Schutzfolie, sowie eine zweite Sicherung gegen Verrutschen gesichert. Bei dieser zweiten Sicherung handelt es sich aber nicht um eine zusätzliche Tasche, Bänder zum Verschnüren, Einlegeelemente in den Spalt zwischen Sitzpolster und Rückenlehne u. ä., wie dies gemäß dem Stand der Technik für die zusätzliche Sicherung erforderlich ist. Vielmehr wird die zweite Sicherung bereitgestellt durch die Reibung des Vorderlagen-Abdeckbereichs mit dem Sitzpolster und/oder der Rückenlehne des Kraftfahrzeugsitzes. Alternativ oder kumulativ besteht die zweite Sicherung in einer Anhaftung des Vorderlagen-Abdeckbereichs an dem Sitzpolster und/oder der Rückenlehne, wobei die Anhaftung gezielt herbeigeführt oder gefördert werden kann, indem die Kraftfahrzeugsitz-Schutzfolie oder der Vorderlagen-Abdeckbereich statisch aufgeladen ist oder mit einer Corona-Behandlung behandelt ist. Erfindungsgemäß ist überraschend festgestellt worden, dass eine Sicherung mittels
- der Tasche für die Kopfstütze einerseits und
- der Reibung des Vorderlagen-Abdeckbereichs mit dem Sitzposter und/oder der Rückenlehne und/oder der Anhaftung andererseits
zur hinreichenden Sicherung gegen Verrutschen ausreichend ist. Vorzugsweise ist hierbei die Reibung des Vorderlagen-Abdeckbereichs auf der dem Sitzpolster und der Rückenlehne zugewandten Seite größer als die Reibung auf der anderen Seite, die in Wechselwirkung tritt mit der Person, die auf dem mit der Kraftfahrzeugsitz-Schutzfolie ausgestatteten Kraftfahrzeugsitz sitzt. In diesem Fall führen Bewegungen der Person dazu, dass eine Gleitbewegung zwischen der Person und der der Person zugewandten Vorderseite der Kraftfahrzeugsitz-Schutzfolie auftritt, während die Kraftfahrzeugsitz-Schutzfolie durch die beiden genannten Sicherungen gegenüber einem Verrutschen an dem Kraftfahrzeugsitz gesichert ist.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Gebrauchsmusters Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Kraftfahrzeugsitz mit einer Kraftfahrzeugsitz-Schutzfolie gemäß dem Stand der Technik (vgl. US 4,676,376 A) in einer räumlichen Ansicht.
- **Fig. 2**: zeigt eine erfindungsgemäße Kraftfahrzeugsitz-Schutzfolie in einer Vorderansicht in einem abgeplatteten Zustand.
- **Fig. 3**: zeigt die Kraftfahrzeugsitz-Schutzfolie gemäß Fig. 2 in einer Seitenansicht (wobei hier die Verschweißungen nicht dargestellt sind).
- **Fig. 4**: zeigt die Kraftfahrzeugsitz-Schutzfolie gemäß Fig. 2 und 3 in einer Darstellung entsprechend Fig. 2 mit möglichen Dimensionen.
- **Fig. 5**: zeigt eine Kraftfahrzeugsitz-Schutzfolie entsprechend Fig. 2 bis 4 in einem Zustand ohne weitere Faltung in einer Rückansicht.
- **Fig. 6**: zeigt die Kraftfahrzeugsitz-Schutzfolie gemäß Fig. 5 in einem gefalteten Zustand für eine Bevorratung in einer Rückansicht.
- **Fig. 7**: zeigt die Kraftfahrzeugsitz-Schutzfolie gemäß Fig. 6 in einer Seitenansicht (wobei hier die Verschweißungen nicht dargestellt sind).
- **Fig. 8**: zeigt eine Folienbahn mit mehreren über Perforationen zusammenhängenden Kraftfahrzeugsitz-Schutzfolien.
- **Fig. 9**: zeigt in einer schematischen räumlichen Ansicht eine auf einen Kraftfahrzeugsitz applizierte Kraftfahrzeugsitz-Schutzfolie.
- **Fig. 10**: zeigt in einer schematischen Seitenansicht die auf den Kraftfahrzeugsitz applizierte Kraftfahrzeugsitz-Schutzfolie.

### FIGURENBESCHREIBUNG

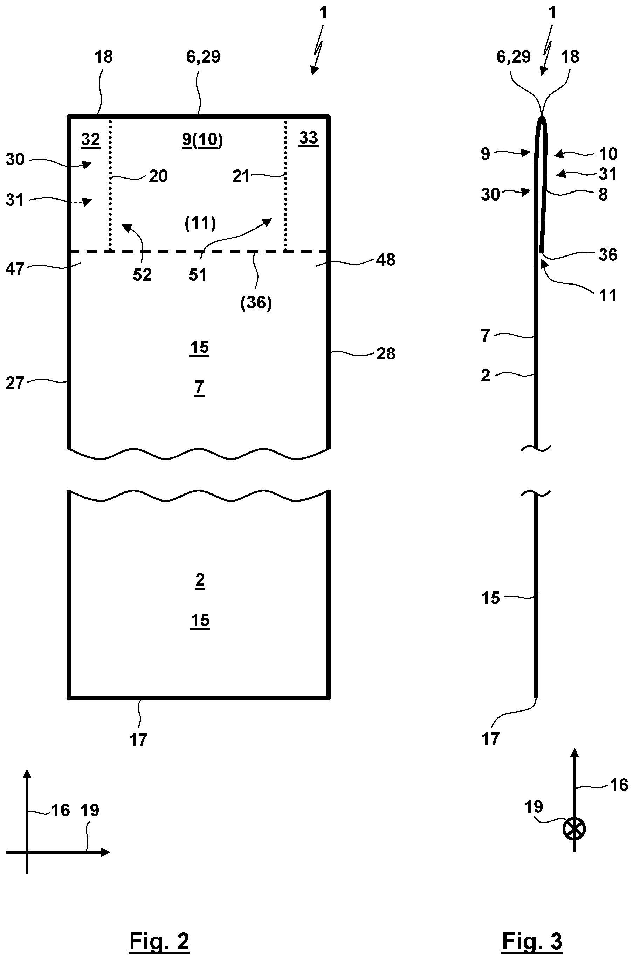

In der vorliegenden Beschreibung bezeichnet eine Längsrichtung 16 der Kraftfahrzeugsitz-Schutzfolie 1 eine Haupterstreckungsrichtung der Kraftfahrzeugsitz-Schutzfolie 1, die bei Ausrichtung der Kraftfahrzeugsitz-Schutzfolie gemäß **Fig. 2** von einem unteren Rand 17 des Vorderlagen-Abdeckbereichs 15 bis zu einem oberen Rand 18 der Kraftfahrzeugsitz-Schutzfolie 1, der von der Faltung 6 bereitgestellt ist, verläuft und in Fig. 2 vertikal orientiert ist. Hingegen bezeichnet eine laterale Richtung 19 oder Querrichtung eine vertikal zur Längsrichtung 16 orientierte Richtung, die in Fig. 2 horizontal orientiert ist. Die laterale Richtung 19 ist in Richtung der kürzeren Erstreckung der Kraftfahrzeugsitz-Schutzfolie 1 orientiert. Beispielsweise erstrecken sich der untere Rand 17 und der obere Rand 18 in laterale Richtung 19, während sich Seitenränder der Kraftfahrzeugsitz-Schutzfolie 1 in die Längsrichtung 16 erstrecken. Für eine auf einem Kraftfahrzeugsitz 3 montierte Kraftfahrzeugsitz-Schutzfolie 1 erfolgt aber eine Abwinklung der Kraftfahrzeugsitz-Schutzfolie 1 entsprechend der Kontur des Kraftfahrzeugsitzes 3, so dass dann im unteren Teilbereich des Vorderlagen-Abdeckbereichs 15 die Längsrichtung 16 der Kraftfahrzeugsitz-Schutzfolie 1 ungefähr in Längsrichtung des Kraftfahrzeugs oder des Sitzpolsters 4 orientiert ist, während die Längsrichtung 16 der Kraftfahrzeugsitz-Schutzfolie 1 im oberen Teilbereich des Vorderlagen-Abdeckbereichs 15 und im Bereich der Tasche 11 ungefähr in Richtung der Fahrzeughochachse bzw. der Hochachse der Rückenlehne 5 orientiert ist.

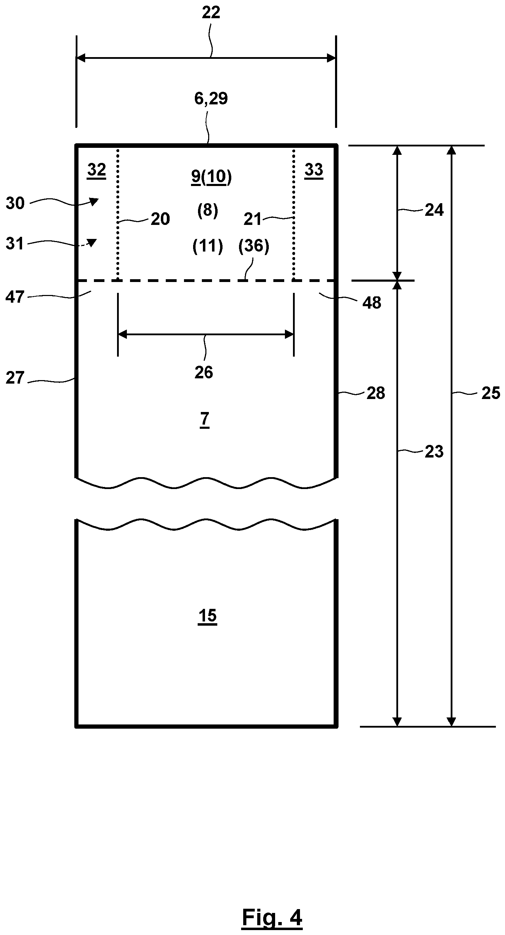

Die erfindungsgemäße Kraftfahrzeugsitz-Schutzfolie 1 besteht aus einer Kunststofffolie 2 mit Verschweißungen 20, 21. Vorzugsweise sind die Verschweißungen 20 lediglich durch Erzeugung von Wärme und unmittelbare Verbindung der Vorderlage 7 mit der Rücklage 8 ohne Einbringung zusätzlichen Materials erzeugt. Die Kunststofffolie 2 verfügt über eine rechteckige Geometrie, deren Breite B in **Fig. 4** mit dem Bezugszeichen 22 gekennzeichnet ist. Die Länge L der rechteckigen Kunststofffolie 2 ergibt sich aus der Summe der Länge 23 des Vorderlagen-Abdeckbereichs 15 und der doppelten Tiefe T der Tasche 11, die in Fig. 4 mit dem Bezugszeichen 24 gekennzeichnet ist. In dem entfalteten Zustand weist die Kraftfahrzeugsitz-Schutzfolie 1 eine Länge 25 auf, die sich aus der Summe der Länge 23 und der Tiefe T 24 ergibt. Ein Abstand A der Verschweißungen 20, 21 ist in Fig. 4 mit dem Bezugszeichen 26 gekennzeichnet. Für das dargestellte Ausführungsbeispiel sind die Verschweißungen 20, 21 in gleichem Abstand von den Seitenrändern 27, 28 der Kraftfahrzeugsitz-Schutzfolie 1 angeordnet, wobei dies nicht zwingend der Fall sein muss.

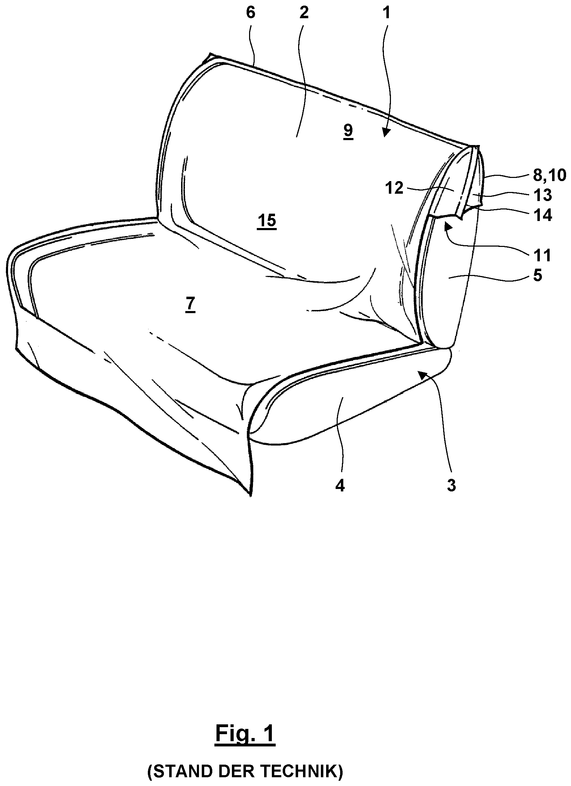

Eine Faltung 6, die hiervon einer Abplattung 29 gebildet ist, unterteilt die Kunststofffolie 2 in eine Vorderlage 7 und eine Rücklage 8. Die der Faltung 6 benachbarten Abschnitte der Vorderlage 7 und der Rücklage 8 bilden einen Vorderlagen-Kopfbereich 30 und einen Rücklagen-Kopfbereich 31. Der Vorderlagen-Kopfbereich 30 und der Rücklagen-Kopfbereich 31 bilden wiederum jeweils einen Vorderlagen-Taschenbereich 9 bzw. einen Rücklagen-Taschenbereich 10 sowie seitlich hiervon angeordnete und durch die Verschweißungen 20, 21 abgetrennte Vorderlagen-Seitenbereiche 32, 33 bzw. Rücklage-Seitenbereiche 34, 35. Die Tasche 11 ist lediglich durch den Vorderlagen-Taschenbereich 9 und den Rücklagen-Taschenbereich 10 (und die Verschweißungen 20, 21) in Umfangsrichtung begrenzt, während diese im oberen Endbereich durch die Faltung 6 begrenzt ist, die damit eine Art "Boden" der Tasche 11 bildet. Zungen, wie diese bei einer Kraftfahrzeugsitz-Schutzfolie gemäß dem Stand der Technik (vgl. Fig. 1) eingesetzt wurden, sind bei einer erfindungsgemäßen Kraftfahrzeugsitz-Schutzfolie 1 (zumindest zur Bildung der Tasche 11) nicht vorhanden. Der der Faltung 6 abgewandte Rand 36 der Rücklage 8 und des Rücklagen-Kopfbereichs 31 begrenzt die Eintrittsöffnung der Tasche 11.

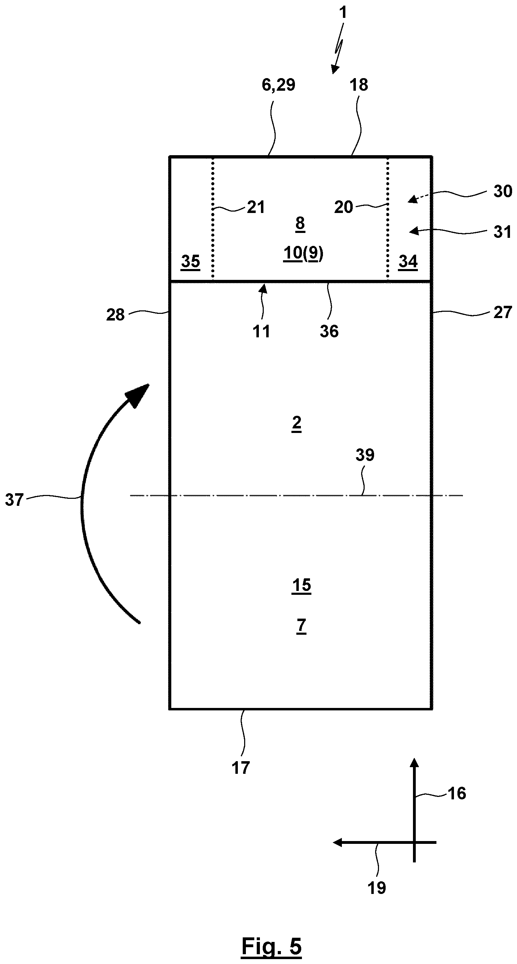

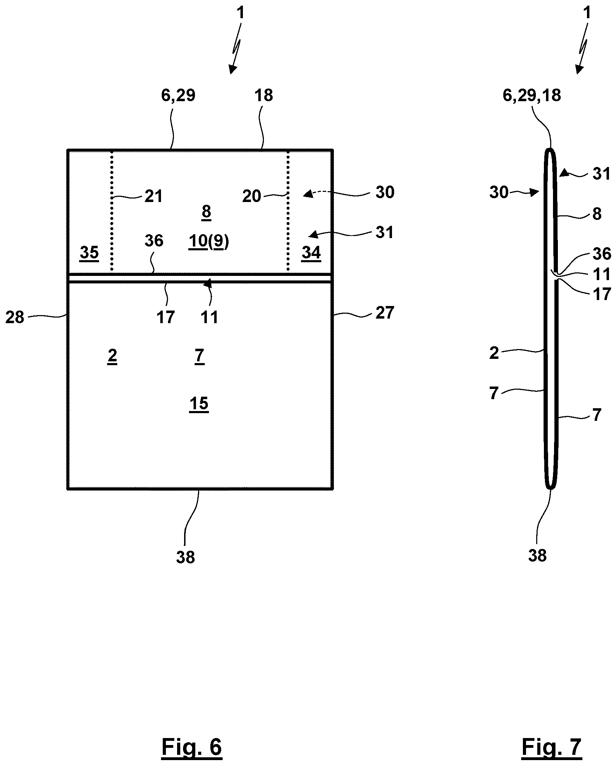

Mittels eines Faltvorgangs 37 kann eine weitere Faltung 38 entlang einer mittig im Bereich des Vorderlagen-Abdeckbereichs 15 angeordneten Faltlinie 39 erfolgen (vgl. den Übergang von **Fig. 5** nach **Fig. 6****/7).**

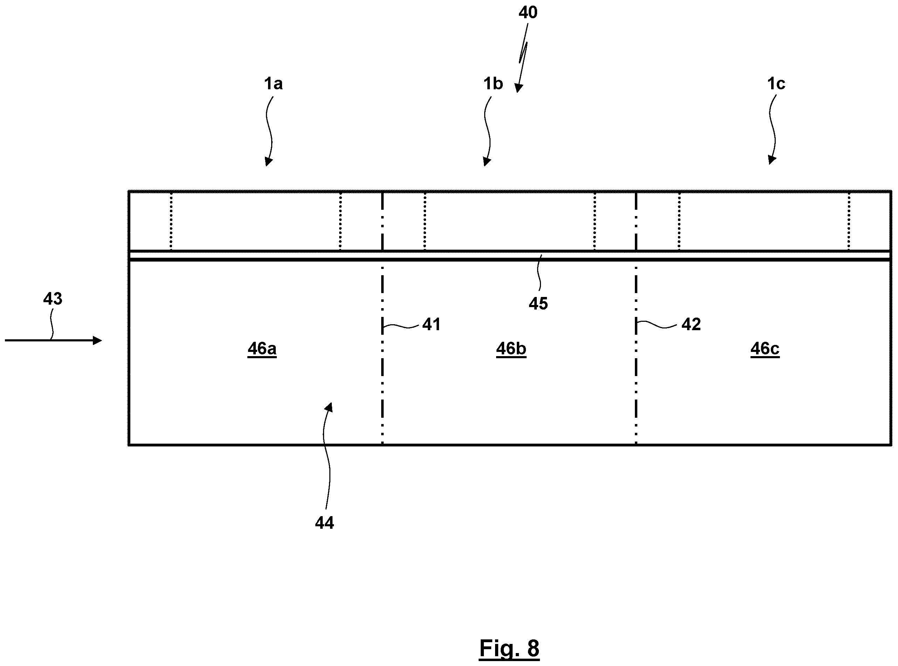

**Fig. 8** zeigt eine Folienbahn 40, in der mehrere Kraftfahrzeugsitz-Schutzfolien 1a, 1b, 1c, ... über Perforationen 41 miteinander verbunden sind. Durch Durchtrennen der Perforationen 41, 42 kann der Benutzer einzelne Kraftfahrzeugsitz-Schutzfolien 1a, 1b, 1c, ... von der Folienbahn 40 für den bevorstehenden Einsatz separieren. In Fig. 8 ist eine Extrusionsrichtung 43 gekennzeichnet, welche für die einzelnen Kraftfahrzeugsitz-Schutzfolien 1a, 1b, 1c, ... der lateralen Richtung 19 entspricht. Die Extrusionsrichtung 43 kennzeichnet eine Extrusionsrichtung in einem kontinuierlichen Extrusionsprozess, eine Förderrichtung der Folienbahn 40 während des Herstellungsprozesses und/oder der Konfektionierung desselben und/oder eine Richtung, in welcher ein Aufwickeln der Folienbahn 40 zu einer Rolle erfolgen kann.

Ein mögliches Herstellungsverfahren der Folienbahn 40 gemäß Fig. 8 ist wie folgt: In einem kontinuierlichen Extrusionsprozess wird in die Extrusionsrichtung 43 ein (Folien-) Schlauch 44 hergestellt. Mittels eines Messers oder anderweitigen Trennorgans wird in den Schlauch 44 ein kontinuierlicher Schlitz 45 eingebracht, der von den Rändern 17, 36 der Kraftfahrzeugsitz-Schutzfolien 1a, 1b, 1c, ... begrenzt ist. Des Weiteren erfolgt quer zu der Extrusionsrichtung 43 einerseits die Erzeugung der Verschweißungen 20, 21 der jeweiligen Kraftfahrzeugsitz-Schutzfolien 1a, 1b, 1c, ... sowie der Perforationen 41, 42. Hieran anschließend kann ein Aufrollen der derart erzeugten Folienbahn 40 erfolgen. Die einzelnen Kraftfahrzeugsitz-Schutzfolien 1a, 1b, 1c, ... bilden in dem mit dem Schlitz 45 ausgestatteten Schlauch 44 jeweils Schlauchstücke 46a, 46b, 46c, ...

Im Folgenden werden die Erfindung nicht beschränkende mögliche Abmessungen einer Kraftfahrzeugsitz-Schutzfolie 1 angegeben:

| | Länge 23 | Tiefe 24 | Breite 22 | Abstand 26 |
|---|---|---|---|---|
| Ausführungsbeispiel 1 | 1350 mm | 200 mm | 850 mm | 420 mm |
| Ausführungsbeispiel 2 | 1500 mm | 250 mm | 900 mm | 500 mm |
| Ausführungsbeispiel 3 | 1600 mm | 300 mm | 950 mm | 600 mm |
| Ausführungsbeispiel 4 | 1550 mm | 200 mm | 850 mm | 510 mm |

Um lediglich ein weiteres Beispiel zu nennen, können die Tiefe 24, die Breite 22 und der Abstand 26 gegenüber den obigen Abmessungen um ±20 %, ±15 %, ±10 % oder ±5 % variieren, während für diese Variationen oder auch die oben angegebenen Werte der Ausführungsbeispiele 1 bis 3 die Länge 23 beliebig von den oben angegebenen Längen abweichen kann.

Möglich ist auch, dass die Länge 23, die Tiefe 24, die Breite 22 und/or der Abstand 26 gegenüber den obigen Abmessungen um maximal ±20 %, ±15 %, ±10 % oder ±5 % variieren.

Vorzugsweise erfolgt die Dimensionierung der Tasche 11 derart, dass das Doppelte des Abstands 26
- mit einem Übermaß,
- exakt oder
- mit einem infolge der Elastizität der Kunststofffolie 2 und/oder der Kopfstütze 49 ausgleichbaren Untermaß
dem Umfang der Kopfstütze 49 entspricht. Die Tiefe 24 der Tasche 11 wird dabei entsprechend der Höhenerstreckung H der Kopfstütze 49 oder geringfügig (bspw. maximal 5 %, maximale 10 % oder maximal 20 %) größer als diese gewählt, wobei aber auch möglich ist, dass die Tiefe 24 der Tasche 11 weniger als 60 %, 70%, 80 %, 90 % oder mehr als 110%, 120%, 130% oder 140 % der Höhenerstreckung der Kopfstütze entspricht. Möglich ist beispielsweise, dass die Tiefe 24 der Tasche 11 150 mm bis 400 mm, vorzugsweise 200 mm bis 300 mm, beträgt.

Möglich ist, dass auf die Kraftfahrzeugsitz-Schutzfolie 1 (neben etwaigen weiteren Aufdrucken wie eine Kundenadresse oder eine Marke eines Herstellers) Bedienhinweise aufgedruckt sind.

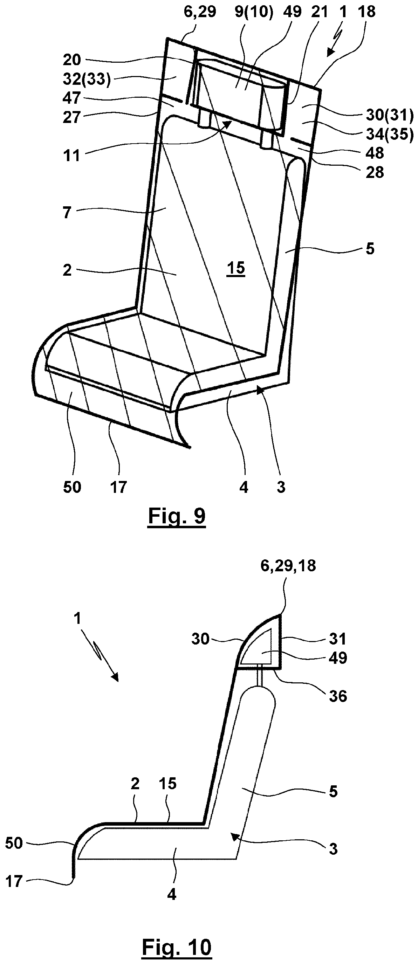

Bei einer Applikation einer Kraftfahrzeugsitz-Schutzfolie 1 auf einen Kraftfahrzeugsitz 3, die in den **Fig. 9** und **10** dargestellt ist, wird die Tasche 11 auf eine Kopfstütze 49 des Kraftfahrzeugsitzes 3 aufgezogen, was auch unter elastischer Aufweitung der Kraftfahrzeugsitz-Schutzfolie 1 erfolgen kann. Der Vorderlagen-Abdeckbereich 15 wird auf die Vorderseite der Rückenlehne 5 und die Oberseite des Sitzpolsters 4 aufgelegt, so dass diese vollständig abgedeckt sind.

In dem oberen Endbereich verfügt der Vorderlagen-Abdeckbereich 15 über Eckbereiche 47, 48. Wären die Vorderlagen-Seitenbereiche 32, 33 und die Rücklagen-Seitenbereiche 34, 35 nicht vorhanden, hätten diese Eckbereiche 47, 48 über die Abstützung an den Ecken der Rückenlehne 5 hinaus keinerlei Halt, so dass sich diese leicht von den Ecken der Rückenlehne 5 lösen und "einklappen" könnten. Für das dargestellte Ausführungsbeispiel sind die Eckbereiche 47, 48 des Vorderlagen-Abdeckbereichs 15 über die Vorderlagen-Seitenbereiche 32, 33 mit der zugeordneten Verschweißung 20, 21, dem Vorderlagen-Taschenbereich 9 und über die Faltung 6 mit dem Rücklagen-Taschenbereich 10 sowie einem zugeordneten Rücklagen-Seitenbereich 34, 35 verbunden, womit die Eckbereiche 47, 48 zusätzlich in ihrer bestimmungsgemäßen Position und Ausrichtung gehalten werden können.

In Fig. 9 und 10 ist zu erkennen, dass die Vorgabe der Position und Orientierung der Kraftfahrzeugsitz-Schutzfolie 1 an dem Kraftfahrzeugsitz 3 erfolgen kann unabhängig davon, wie weit die Kopfstütze 49 aus der Rückenlehne herausgezogen ist. Je nach dem Ausmaß des Herausziehens der Kopfstütze 49 verschiebt sich lediglich in geringem Ausmaß der Vorderlagen-Abdeckbereich 15 in Längsrichtung relativ zu dem Sitzpolster 4 und der Rückenlehne 5. Hierbei ist die Längserstreckung des Vorderlagen-Abdeckbereichs 15 so gewählt, dass das Sitzpolster 4 in dem zu schützenden Bereich auch dann abgedeckt ist, wenn die Kopfstütze 49 maximal herausgezogen ist. Dies hat zur Folge, dass für die nicht maximal herausgezogene Kopfstütze 49 der Vorderlagen-Abdeckbereich 15 über den zu schützenden Bereich des Sitzpolsters 4 hinausgeht und vor dem Sitzpolster 4 herunterhängen kann. Der Übermaßbereich 50 verfügt dabei beispielsweise zumindest über eine Längserstreckung, die der maximalen Ausziehhöhe der Kopfstütze 49 entspricht.

Möglich ist, dass eine Folienbahn 40 oder auch einzelne Kraftfahrzeugsitz-Schutzfolien 1 für die einzelne Bevorratung, die Bevorratung in einem Karton oder bei einem Aufwickeln auf eine Rolle (zusätzlich zu den zuvor erläuterten Faltungen) C-förmig gefaltet ist/sind. Für den Fall des Wickelns einer Rolle führt die C-förmige Faltung im lateralen Randbereich der Rolle dazu, dass die hier von den Enden des C mit dem Grundschenkel des C gebildeten Überlappungen zu einer dichteren und damit stabileren Wicklung führen als dies in der lateralen Mitte der Fall ist. Mittels einer C-förmigen Faltung kann auch eine Anpassung der Dimensionen derart erfolgen, dass diese oder ein Vielfaches derselben für mehrere nebeneinanderliegende Kraftfahrzeugsitz-Schutzfolien der Abmessung einer genormten Euro-Palette entspricht.

Die Kraftfahrzeugsitz-Schutzfolie 1 kann mehrfach eingesetzt werden und lediglich tageweise benutzt werden oder auch als Wochenschutzbezug verwendet werden. Möglich ist, dass die Kraftfahrzeugsitz-Schutzfolie 1 vollständig aus einer recycelten Kunststofffolie hergestellt ist, einen recycelten Schutzfolienteilbereich aufweist oder eine vorzugsweise innenliegende Schicht der Folie aus recyceltem Material besteht oder recyceltes Material beinhaltet, wobei der Massenanteil des recycelten Materials vorzugsweise im Bereich von 10 % bis 70 % (insbesondere 30 % bis 60 %) der Gesamtmasse der Kunststofffolie liegt. Besteht eine innenliegende Schicht oder eine mittlere Schicht von 3 Schichten aus einem recyceltem Material, kann das recycelte Material bis zu 50 % (Gewichtsprozent oder Volumenprozent) des Gesamtmaterials der geschichteten Folie ausmachen. In diesem Fall verfügt vorzugsweise die Außenschicht, die dem Benutzer zugewandt ist, auf der dem Benutzer zugewandten Außenseite über einen kleineren Reibkoeffizienten als die andere Außenschicht auf der Außenseite, die dem Kraftfahrzeugsitz zugewandt ist.

Die Fahrzeugsitz-Schutzfolie 1 kann, solange diese nicht verschmutzt ist, wiederverwendet werden. Die Fahrzeugsitz-Schutzfolie 1 kann nach der Benutzung als Ganzes recycelt werden.

Möglich ist im Rahmen der Erfindung, dass abweichend zu den dargestellten Ausführungsbeispielen die Vorderlagen-Seitenbereiche 32, 33 entfernt sind, indem diese beispielsweise während der Herstellung der Kraftfahrzeugsitz-Schutzfolie 1 herausgeschnitten sind oder über eine Perforation abtrennbar sind. Die herausgetrennten Vorderlagen-Seitenbereiche 32, 33 können dann für andere Zwecke verwendet werden und über ergänzende Maßnahmen an die anderen Zwecke, insbesondere für den Einsatzzweck als Schutzfolie für ein anderes Teil des Kraftfahrzeuges, angepasst sein. So ist beispielsweise möglich, dass die Vorderlagen-Seitenbereiche 32, 33 eine taschenartige Schutzfolie für einen Getriebeschalthebel bilden. Auch in einer Folienbahn 40, wie diese beispielsweise in Fig. 8 dargestellt ist, können die Vorderlage-Seitenbereiche 32, 33 entfernt sein, womit dann die Folienbahn 40 keinen durchgehenden, geradlinigen oberen Rand aufweist, sondern im Bereich des oberen Randes und der Vorderlagen-Seitenbereiche 32, 33 beispielsweise rechteckige Einschnitte aufweist. Hierbei können die beiden Vorlagen-Seitenbereich 32, 33 von benachbarten Kraftfahrzeugsitz-Schutzfolien 1a, 1b mit einem gemeinsamen rechteckigen Ausschnitt oder Perforationen zwischen den Verschweißungen 20, 21 entfernt sein.

Grundsätzlich möglich ist, dass für den Fall, dass für die Kraftfahrzeugsitz-Schutzfolie 1 eine Folie mit drei Schichten verwendet wird, eine mittlere Schicht zumindest teilweise aus einer recycelten Folie hergestellt ist. Beispielsweise kann die mittlere Schicht aus dem Material von herausgetrennten Vorderlagen-Seitenbereichen 32, 33 hergestellt sein.

Möglich ist auch, dass die Länge 25 des Kraftfahrzeugsitz-Schutzbezuges 1 so bemessen ist, dass der Kraftfahrzeugsitz-Schutzbezug 1 nicht nur den Kraftfahrzeugsitz 3 abdeckt, sondern sich über die vorderen Rand des Sitzpolsters 4 hinaus nach unten erstreckt, so dass auch die Vorderseite des Kraftfahrzeugsitzes 3 durch den herabhängenden Bereich des Kraftfahrzeugsitz-Schutzbezuges 1 abgedeckt ist und/oder sogar der Boden des Fußraumes vor dem Kraftfahrzeugsitz 3 abgedeckt ist, so dass der Kraftfahrzeugsitz-Schutzbezug 1 zwischen dem Boden und den Schuhen der Person, die auf dem Kraftfahrzeugsitz 3 sitzt, angeordnet ist und eine weitere Schutzfunktion erfüllt.

Auf beiden Seiten bildet der Kraftfahrzeugsitz-Schutzbezug 1 im oberen Endbereich Treppenformen 51, 52, die spiegelsymmetrisch zu der Längsachse des Kraftfahrzeugsitz-Schutzbezuges 1 sind. Die Treppenform 51 (bzw. 52) ist gebildet mit dem Seitenrand 27 (bzw. 28), dem Rand 36 der Tasche 11, der Verschweißung 20 (bzw. 21) und dem oberen Rand 18.

### BEZUGSZEICHENLISTE

- 1: Kraftfahrzeugsitz-Schutzfolie
- 2: Kunststofffolie
- 3: Kraftfahrzeugsitz
- 4: Sitzpolster
- 5: Rückenlehne
- 6: Faltung
- 7: Vorderlage
- 8: Rücklage
- 9: Vorderlagen-Taschenbereich
- 10: Rücklagen-Taschenbereich
- 11: Tasche
- 12: Zunge
- 13: Zunge
- 14: Verschweißung
- 15: Vorderlagen-Abdeckbereich
- 16: Längsrichtung
- 17: unterer Rand
- 18: oberer Rand
- 19: laterale Richtung, Querrichtung
- 20: Verschweißung
- 21: Verschweißung
- 22: Breite B
- 23: Länge Vorderlagen-Abdeckbereich
- 24: Tiefe T der Tasche
- 25: Länge
- 26: Abstand A der Verschweißungen
- 27: Seitenrand
- 28: Seitenrand
- 29: Abplattung
- 30: Vorderlagen-Kopfbereich
- 31: Rücklagen-Kopfbereich
- 32: Vorderlagen-Seitenbereich
- 33: Vorderlagen-Seitenbereich
- 34: Rücklagen-Seitenbereich
- 35: Rücklagen-Seitenbereich
- 36: Rand der Tasche
- 37: Faltvorgang
- 38: Faltung
- 39: Faltlinie
- 40: Folienbahn
- 41: Perforation
- 42: Perforation
- 43: Extrusionsrichtung
- 44: Schlauch
- 45: Schlitz
- 46: Schlauchstück
- 47: Eckbereich
- 48: Eckbereich
- 49: Kopfstütze
- 50: Übermaßbereich
- 51: Treppenform
- 52: Treppenform

## Patentansprüche

1. Kraftfahrzeugsitz-Schutzfolie (1) aus einer Kunststofffolie (2), die eine Faltung (6) derart aufweist, dass die Kunststofffolie (2) eine Vorderlage (7) und eine Rücklage (8) ausbildet, wobei
a) die Vorderlage (7) einen Vorderlagen-Abdeckbereich (15) und einen Vorderlagen-Kopfbereich (30) ausbildet,
b) die Rücklage (8) einen Rücklagen-Kopfbereich (31) ausbildet und
c) der Vorderlagen-Kopfbereich (30) und der Rücklagen-Kopfbereich (31) eine Tasche (11) begrenzen, die über einen Teil eines Kraftfahrzeugsitzes (3) gestülpt werden kann,
d) wobei
da) die Kunststofffolie (2) über eine rechteckige Geometrie mit einer Breite B (22) verfügt,
db) sich die Länge L der rechteckigen Kunststofffolie (2) aus der Summe einer Länge (23) des Vorderlagen-Abdeckbereichs (15) und einer doppelten Tiefe T (24) der Tasche (11) ergibt,
dc) die Kraftfahrzeugsitz-Schutzfolie (1) in einem entfalteten Zustand eine Länge (25) aufweist, die sich aus der Summe der Länge (23) und der Tiefe T (24) ergibt, und die Breite B (22) aufweist,
**dadurch gekennzeichnet, dass**
e) der Vorderlagen-Kopfbereich (30) und der Rücklagen-Kopfbereich (31) unmittelbar mittels Verschweißungen (20, 21) miteinander verschweißt sind, deren lateraler Abstand (26) weniger als 80% der Breite (22) der Kunststofffolie (2) beträgt, und
f) die Tasche (11) für das Überstülpen über eine Kopfstütze (49) des Kraftfahrzeugsitzes (3) ausgebildet und bestimmt ist.

2. Kraftfahrzeugsitz-Schutzfolie (1) nach Anspruch 1, **dadurch gekennzeichnet, dass** die Verschweißungen (20, 21)
a) in dem Vorderlagen-Kopfbereich (30) einen Vorderlagen-Taschenbereich (9) von lateral hiervon angeordneten Vorderlagen-Seitenbereichen (32, 33) und/oder
b) in dem Rücklagen-Kopfbereich (31) einen Rücklagen-Taschenbereich (10) von lateral hiervon angeordneten Rücklagen-Seitenbereichen (34, 35)
trennen.

3. Kraftfahrzeugsitz-Schutzfolie (1) nach Anspruch 2, **dadurch gekennzeichnet, dass** der Vorderlagen-Abdeckbereich (15) im oberen Endbereich Eckbereiche (47, 48) aufweist, welche über die Vorderlagen-Seitenbereiche (32, 33) mit
a) einer Verschweißung (20; 21) und/oder
b) dem Vorderlagen-Taschenbereich (9) und/oder
c) über die Faltung (6) mit dem Rücklagen-Taschenbereich (10) und/oder einem Rücklagen-Seitenbereich (34; 35)
verbunden sind.

4. Kraftfahrzeugsitz-Schutzfolie (1) nach einem der vorhergehenden Ansprüche, **dadurch gekennzeichnet, dass** die Kunststofffolie (2) eine Dicke aufweist, die kleiner ist als 100µm.

5. Kraftfahrzeugsitz-Schutzfolie (1) nach einem der vorhergehenden Ansprüche, **dadurch gekennzeichnet, dass** die Kunststofffolie (2) mindestens zwei Schichten aufweist, wobei insbesondere eine erste außenliegende Schicht der Kunststofffolie (2) eine niedrigere Reibung und/oder Anhaftungswirkung aufweist als eine zweite außenliegende Schicht der Kunststofffolie.

6. Kraftfahrzeugsitz-Schutzfolie (1) nach Anspruch 5, **dadurch gekennzeichnet, dass** die erste außenliegenden Schicht HDPE aufweist und die zweite außenliegenden Schicht LLDPE aufweist.

7. Kraftfahrzeugsitz-Schutzfolie (1) nach Anspruch 5 oder 6, **dadurch gekennzeichnet, dass** die zweite außenliegende Schicht 3 bis 20 Gewichtsprozent Kreide aufweist.

8. Kraftfahrzeugsitz-Schutzfolie (1) nach einem der vorhergehenden Ansprüche, **dadurch gekennzeichnet, dass** die Kunststofffolie (2) mit einer Extrusionsrichtung (43) hergestellt ist, welche quer zu einer Längserstreckung (16) der Kraftfahrzeugsitz-Schutzfolie (1) orientiert ist.

9. Kraftfahrzeugsitz-Schutzfolie (1) nach einem der vorhergehenden Ansprüche, **dadurch gekennzeichnet, dass** im Vorderlagen-Abdeckbereich (15) eine weitere Faltung (38) vorhanden ist.

10. Kraftfahrzeugsitz-Schutzfolie (1) nach Anspruch 9, **dadurch gekennzeichnet, dass** die Kraftfahrzeugsitz-Schutzfolie (1) als Schlauchstück (46) ausgebildet ist, wobei
a) das Schlauchstück (46) Abplattungen aufweist, die die Faltungen (6, 38) bilden,
b) das Schlauchstück (46) einen Schlitz (45) aufweist, der einen unteren Rand (17) der Kunststofffolie von einem oberen Rand (36) der Kunststofffolie (2) trennt, und
c) Schlauchstück-Enden des Schlauchstücks (46) die Seitenränder (27, 28) der Kunststofffolie (2) bilden.

11. Kraftfahrzeugsitz-Schutzfolie (1) nach einem der vorhergehenden Ansprüche, **dadurch gekennzeichnet, dass** die Tiefe (24) der Tasche (11) kleiner ist als 400 mm.

12. Kraftfahrzeugsitz-Schutzfolie (1) nach einem der vorhergehenden Ansprüche, **dadurch gekennzeichnet, dass** die Folie der Kraftfahrzeugsitz-Schutzfolie (1) ohne Verschweißungen und ohne Faltungen
a) eine Längserstreckung hat, die weniger als 25% größer ist als die Länge (25) der Kraftfahrzeugsitz-Schutzfolie (1) mit der Faltung (6) und den Verschweißungen (20, 21) und
b) eine Breite hat, die der Breite (22) der Kraftfahrzeugsitz-Schutzfolie (1) mit der Faltung (6) und den Verschweißungen (20, 21) entspricht.

13. Kraftfahrzeugsitz-Schutzfolie (1) nach einem der vorhergehenden Ansprüche, **dadurch gekennzeichnet, dass** die Breite (22) der Kraftfahrzeugsitz-Schutzfolie (1) kleiner ist als 900 mm, insbesondere kleiner ist als 650 mm.

14. Folienbahn (40) mit mehreren Kraftfahrzeugsitz-Schutzfolien (1a, 1b, 1c, ...) nach einem der vorhergehenden Ansprüche.

15. Verfahren zur Herstellung einer Folienbahn (40) nach Anspruch 14 mit folgenden Verfahrensschritten:
a) Herstellen eines Schlauchstück (46) mit Abplattungen, die die Faltungen (6, 38) bilden,
b) Erzeugen eines Schlitzes (45) des Schlauchstück (46), der den unteren Rand (17) von dem oberen Rand (36) trennt,
c) Erzeugen der Verschweißungen (20, 21) mit einem Abstand (26) voneinander, der kleiner ist als eine Breite (22) der Kunststofffolie (2), und
d) Erzeugen von Perforationen oder Schnitten, die die Seitenränder (27, 28) der Kunststofffolie (2) bilden.

16. Kraftfahrzeugsitz-Baugruppe mit einem Kraftfahrzeugsitz (3) und einer den Kraftfahrzeugsitz (3) schützenden Kraftfahrzeugsitz-Schutzfolie (1) nach einem der Ansprüche 1 bis 13, **dadurch gekennzeichnet, dass**
a) die Tasche (11) der Kraftfahrzeugsitz-Schutzfolie (1) auf die Kopfstütze (4) des Kraftfahrzeugsitzes (3) aufgezogen ist,
b) der Vorderlagen-Abdeckbereich (15) der Kraftfahrzeugsitz-Schutzfolie (1) lose auf dem Kraftfahrzeugsitz (3) aufliegt und das Sitzpolster (4) und die Rückenlehne (5) des Kraftfahrzeugsitzes (3) abdeckt und
c) die Kraftfahrzeugsitz-Schutzfolie (1) ausschließlich durch
ca) die Aufnahme der Kopfstürze (4) des Kraftfahrzeugsitzes (3) in der Tasche (11) der Kraftfahrzeugsitz-Schutzfolie (1) und
cb) die Reibung des Vorderlagen-Abdeckbereichs (15) mit dem Sitzpolster (4) und/oder der Rückenlehne (5) des Kraftfahrzeugsitzes (3) und/oder eine Anhaftung des Vorderlagen-Abdeckbereichs (15) an dem Sitzpolster (4) und/oder an der Rückenlehne (5) des Kraftfahrzeugsitzes (3)
gegen Verrutschen gesichert ist.

## Claims

1. Motor vehicle seat protective film (1) made from a plastic film (2) comprises a folding (6) such that the plastic film (2) forms a front layer (7) and a rear layer (8) wherein
a) the front layer (7) comprises a front layer covering portion (15) and a front layer head portion (30)
b) the rear layer (8) comprises a rear layer head portion (31) and
c) the front layer head portion (30) and the rear layer head portion (31) delimit a pocket (11) which can be put over a part of a motor vehicle seat (3),
d) wherein
da) the plastic film (2) has a rectangular geometry with a width B (22)
db) the length L of the rectangular plastic film (2) is the sum of a length (23) of the front layer covering portion (15) and the double of the depth T(24) of the pocket (11),
dc) in the unfolded state the motor vehicle seat protective film (1) has a length (25) which equals the sum of the length (23) and the depth T (24) and has the width B (22),
**characterised in that**
e) the front layer head portion (30) and the rear layer head portion (31) are directly welded to each other by weldings (20, 21), the lateral distance (26) of the weldings (20, 21) being smaller than 80% of the width (22) of the plastic film (2) and
f) the pocket (11) is designed and designated for being put over a headrest (49) of the motor vehicle seat (3).

2. Motor vehicle seat protective film (1) of claim 1, **characterised in that** the weldings (20, 21) separate
a) in the front layer head portion (30) a front layer pocket portion (9) from front layer side portions (32, 33) being arranged laterally therefrom and/or
b) in the rear layer head portion (31) a rear layer pocket portion (10) from rear layer side portions (34, 35) arranged laterally therefrom.

3. Motor vehicle seat protective film (1) of claim 2, **characterised in that** the front layer covering portion (15) comprises corner portions (47, 48) in the upper end regions, the corner portions (47, 48) being connected via the front layer site portions (32, 33)
a) to a welding (20; 21) and/or
b) to the front layer pocket portion (9) and/or
c) via the folding (6) to the rear layer pocket portion (10) and/or to a rear layer side portion (34, 35).

4. Motor vehicle seat protective film (1) of one of the preceding claims, **characterised in that** the plastic film (2) has a thickness being smaller than 100 µm.

5. Motor vehicle seat protective film (1) of one of the preceding claims, **characterised in that** the plastic film (2) comprises at least two film layers wherein in particular a first outer film layer of the plastic film (2) has a lower coefficient of friction and/or adhering effect than a second outer film layer of the plastic film.

6. Motor vehicle seat protective film (1) of claim 5, **characterised in that** the first outer film layer comprises HDPE and the second outer film layer comprises LLDPE.

7. Motor vehicle seat protective film (1) of claim 5 or 6, **characterised in that** the second outer film layer comprises 3 to 20 percent per weight of chalk.

8. Motor vehicle seat protective film (1) of one of the preceding claims, **characterised in that** the plastic film (2) is manufactured with a direction of extrusion (43) having an orientation transverse to a longitudinal extension (16) of the motor vehicle protective film (1).

9. Motor vehicle seat protective film (1) of one of the preceding claims, **characterised in that** another folding (38) is provided in the front layer covering portion (15).

10. Motor vehicle seat protective film (1) of claim 9, **characterised in that** the motor vehicle seat protective film (1) is a tubular piece (46) wherein
a) the tubular piece (46) comprises flattenings which form the foldings (6, 38),
b) the tubular piece (46) comprises a slit (45) which separates a lower edge (17) of the plastic film from an upper edge (36) of the plastic film (2) and
c) tubular piece ends of the tubular piece (46) form the side edges (27, 28) of the plastic film (2).

11. Motor vehicle seat protective film (1) of one of the preceding claims, **characterised in that** the depth (24) of the pocket (11) is smaller than 400 mm.

12. Motor vehicle seat protective film (1) of one of the preceding claims, **characterised in that** without weldings and without foldings the film of the motor vehicle seat protective film (1)
a) has a longitudinal extension being less than 25 % larger than the length (25) of the motor vehicle protective film (1) with the folding (6) and with the weldings (20, 21) and
b) has a width that corresponds to the width (22) of the motor vehicle seat protective film (1) with the folding (6) and the weldings (20, 21).

13. Motor vehicle seat protective film (1) of one of the preceding claims, **characterised in that** the width (22) of the motor vehicle seat protective film (1) is smaller than 900 mm, in particular smaller than 650 mm.

14. Film web (40) comprising a plurality of motor vehicle seat protective films (1a, 1b, 1c...) of one of the preceding claims.

15. Method for manufacturing a film web (40) of claim 14, the method comprising the following method steps:
a) manufacturing of a tubular piece (46) with flattenings which form the foldings (6, 38),
b) generation of a slit (45) of the tubular piece (46) which separates the lower edge (17) from the upper edge (36),
c) generation of the weldings (20, 21) with a distance (26) from each other which is smaller than the width (22) of the plastic film (2) and
d) generation of perforations or cuttings which form the side edges (27, 28) of the plastic film (2).

16. Motor vehicle seat assembly group comprising a motor vehicle seat (3) and a motor vehicle seat protective film (1) of one of claims 1 to 13 protecting the motor vehicle seat (3), **characterised in that**
a) the pocket (11) of the motor vehicle seat protective film (1) is pulled onto the headrest (4) of the motor vehicle seat (3),
b) the front layer covering portion (15) of the motor vehicle seat protective film (1) is loosely lying on the motor vehicle seat (3) and covers the seat cushion (4) and the backrest (5) of the motor vehicle seat (3) and
c) the motor vehicle seat protective film (1) is solely secured against slipping by
ca) the accommodation of the headrest (4) of the motor vehicle seat (3) in the pocket (11) of the motor vehicle seat protective film (1) and
cb) the friction of the front layer covering portion (15) with the seat cushion (4) and/or with the backrest (5) of the motor vehicle seat (3) and/or an adhering effect of the front layer covering portion (15) on the seat cushion (4) and/or on the backrest (5) of the motor vehicle seat (3).

## Revendications

1. Film de protection de siège de véhicule automobile (1) constitué d'un film de matière plastique (2) qui comprend un pliage (6) de façon à ce que le film de matière plastique (2) forme une couche avant (7) et une couche arrière (8), dans lequel
a) la couche avant (7) forme une partie de recouvrement de couche avant (15) et une partie de tête de couche avant (30),
b) la couche arrière (8) forme une partie de tête de couche arrière (31) et
c) la partie de tête de couche avant (30) et la partie de tête de couche arrière (31) délimitent une poche (11) qui peut être retroussée sur une partie d'un siège de véhicule automobile (3)
d) dans lequel
da) le film de matière plastique (2) présente une géométrie rectangulaire avec une largeur B (22),
db) la longueur L du film de matière plastique (2) rectangulaire résulte de la somme d'une longueur (23) de la partie de recouvrement de couche avant (15) et le double d'une profondeur T (24) de la poche (11),
dc) le film de protection de siège de véhicule automobile (1) présente, dans un état déplié, une longueur (25) qui résulte de la somme de la longueur (23) et de la profondeur T (24) et présente la largeur B (22),
**caractérisé en ce que**
e) la partie de tête de couche avant (30) et la partie de tête de couche arrière (31) sont soudées directement entre elles au moyen de soudures (20, 21) dont la distance latérale (26) représente moins de 80 % de la largeur (22) du film de matière plastique (2) et
f) la poche (11) est conçue et déterminée pour le retroussement sur un appuie-tête (49) du siège de véhicule automobile (3).

2. Film de protection de siège de véhicule automobile (1) selon la revendication 1, **caractérisé en ce que** les soudures (20, 21) séparent
a) dans la partie de tête de couche avant (30), une partie de poche de couche avant (9) de parties latérales de couche avant (32, 33) disposées sur les côtés de celle-ci et/ou
b) dans la partie de tête de couche arrière (31), une partie de poche de couche arrière (10) de parties latérales de couche arrière (34, 35) disposées sur les côtés de celle-ci.

3. Film de protection de siège de véhicule automobile (1) selon la revendication 2, **caractérisé en ce que** la partie de recouvrement de couche avant (15) comprend, dans la partie d'extrémité supérieure, des parties angulaires (47, 48), qui sont reliées, par l'intermédiaire des parties latérales de couche avant (32, 33),
a) avec une soudure (20 ; 21) et/ou
b) avec la partie de poche de couche avant (9) et/ou
c) par l'intermédiaire du pliage (6), avec la partie de poche de couche arrière (10) et/ou une partie latérale de couche arrière (34 ; 35).

4. Film de protection de siège de véhicule automobile (1) selon l'une des revendications précédentes, **caractérisé en ce que** le film de matière plastique (2) présente une épaisseur inférieure à 100 µm.

5. Film de protection de siège de véhicule automobile (1) selon l'une des revendications précédentes, **caractérisé en ce que** le film de matière plastique (2) comprend deux couches, dans lequel plus particulièrement une première couche externe du film de matière plastique (2) présente une friction et/ou un effet d'adhérence plus faible qu'une deuxième couche externe du film de matière plastique.

6. Film de protection de siège de véhicule automobile (1) selon la revendication 5, **caractérisé en ce que** la première couche externe comprend du HDPE et la deuxième couche externe comprend du LLDPE.

7. Film de protection de siège de véhicule automobile (1) selon la revendication 5 ou 6, **caractérisé en ce que** la deuxième couche externe comprend 3 à 20 % en poids de craie.

8. Film de protection de siège de véhicule automobile (1) selon l'une des revendications précédentes, **caractérisé en ce que** le film de matière plastique (2) est fabriqué avec une direction d'extrusion (43) orientée transversalement par rapport à une extension longitudinale (16) du film de protection de siège de véhicule automobile (1).

9. Film de protection de siège de véhicule automobile (1) selon l'une des revendications précédentes, **caractérisé en ce que**, dans la partie de recouvrement de couche avant (15), se trouve un autre pliage (38).

10. Film de protection de siège de véhicule automobile (1) selon la revendication 9, **caractérisé en ce que** le film de protection de siège de véhicule automobile (1) est conçu comme un élément de gaine (46), dans lequel
a) l'élément de gaine (46) comprend des aplatissements qui forment les pliages (6, 38),
b) l'élément de gaine (46) comprend une fente (45) qui sépare un bord inférieur (17) du film de matière plastique d'un bord supérieur (36) du film de matière plastique (2) et
c) les extrémités de l'élément de gaine (46) forment les bords latéraux (27, 28) du film de matière plastique (2).

11. Film de protection de siège de véhicule automobile (1) selon l'une des revendications précédentes, **caractérisé en ce que** la profondeur (24) de la poche (11) est inférieure à 400 mm.

12. Film de protection de siège de véhicule automobile (1) selon l'une des revendications précédentes, **caractérisé en ce que** le film de protection de siège de véhicule automobile (1), sans soudures et sans pliages,
a) présente une extension longitudinale qui est supérieure de moins de 25 % à la longueur (25) du film de protection de siège de véhicule automobile (1) avec le pliage (6) et les soudures (20, 21) et
b) présente une largeur qui correspond à la largeur (22) du film de protection de siège de véhicule automobile (1) avec le pliage (6) et les soudures (20, 21).

13. Film de protection de siège de véhicule automobile (1) selon l'une des revendications précédentes, **caractérisé en ce que** la largeur (22) du film de protection de siège de véhicule automobile (1) est inférieure à 900 mm, plus particulièrement inférieure à 650 mm.

14. Bande continue (40) avec plusieurs films de protection de siège de véhicule automobile (1a, 1b, 1c...) selon l'une des revendications précédentes.

15. Procédé de fabrication d'une bande continue (40) selon la revendication 14, avec les étapes suivantes :
a) fabrication d'un élément de gaine (46) avec des aplatissements qui forment les pliages (6, 38),
b) réalisation d'une fente (45) de l'élément de gaine (46), qui sépare le bord inférieur (17) du bord supérieur (36),
c) réalisation des soudures (20, 21) avec une distance (26) entre elles qui est inférieure à une largeur (22) du film de matière plastique (2) et
d) réalisation de perforations ou de coupes qui forment les bords latéraux (27, 28) du film de matière plastique (2).

16. Module de siège de véhicule automobile avec un siège de véhicule automobile (3) et un film de protection de siège de véhicule automobile (1) protégeant le siège de véhicule automobile selon l'une des revendications 1 à 13, **caractérisé en ce que**
a) la poche (11) du film de protection de siège de véhicule automobile (1) est enfilée sur l'appuie-tête (4) du siège de véhicule automobile (3),
b) la partie de recouvrement de couche arrière (15) du film de protection de siège de véhicule automobile (1) repose de manière libre sur le siège de véhicule automobile (3) et recouvre le rembourrage de siège (4) et le dossier (5) du siège de véhicule automobile (3) et
c) le film de protection de siège de véhicule automobile (1) est protégé d'un glissement exclusivement par
ca) le logement de l'appuie-tête (4) du siège de véhicule automobile (3) dans la poche (11) du film de protection de siège de véhicule automobile (1) et
cb) la friction de la partie de recouvrement de couche arrière (15) avec le rembourrage de siège (4) et/ou le dossier (5) du siège de véhicule automobile (3) et/ou une adhérence de la partie de recouvrement de couche arrière (15) au rembourrage de siège (4) et/ou au dossier (5) du siège de véhicule automobile (3).
